# DEMANDE DE BREVET EUROPEEN

(11) **EP 4 624 646 A1**
(43) Date de publication de la demande: **01.10.2025**
(21) Numéro de dépôt: 25166805.9
(22) Date de dépôt: 27.03.2025
(51) Int. Cl.: D03C 1/00, D03C 1/14, H02K 1/14, H02K 1/278, H02K 5/167, H02K 5/173, H02K 7/14, H02K 21/16, H02K 7/075

(54) **MACHINE DE FORMATION DE LA FOULE ET ENSEMBLE DE FORMATION DE LA FOULE COMPRENANT UN GROUPE DE TELLES MACHINES**

(30) Priorité: 28.03.2024 FR 2403210
(71) Demandeur: Staubli Faverges, 74210 Faverges-Seythenex (FR)
(72) Inventeur: GRANGE, Hervé, 73200 CESARCHES (FR); BOILLOT, Anthony, 74320 LESCHAUX (FR); PEUGET, Raphael, 38530 PONTCHARRA (FR); ALCIATO, Laurent, 74210 VAL DE CHAISE (FR)
(74) Mandataire: Lavoix

(57) **Abrégé**

La machine (9) comprend un moteur électrique rotatif, une manivelle, un levier d'attaque et une bielle d'attaque. Le stator (23) du moteur comprend des tôles de bobinage (33), s'étendant radialement entre un diamètre externe de stator (D23e) et un diamètre interne de stator (D23i), et des bobinages électriques (39). Le rotor (29) du moteur comprend un arbre de rotor (51), centré sur un axe principal (A1), entouré par une partie cylindrique (53) du rotor et solidaire de la partie cylindrique et de la manivelle, et des aimants permanents (57). Un rapport du diamètre externe de stator (D23e) par rapport à une longueur (L53) de la partie cylindrique (53), mesurée parallèlement à l'axe principal sans dépasser les aimants permanents, est compris entre 2.0 et 4.0, de préférence compris entre 2.5 et 3.5, de préférence encore compris entre 2.8 et 3.2.

## Description

La présente invention concerne une machine de formation de la foule et un ensemble de formation de la foule comprenant un groupe de telles machines.

L'invention se rapporte au domaine technique des machines de formation de la foule de type actionneur de bielle au cadre, pour un métier à tisser à cadres de lisses.

Il est connu d'employer une pluralité d'actionneurs électriques au cadre pour entraîner en oscillations verticales des cadres de lisses. Selon la technologie employée, les actionneurs électriques produisent une rotation en oscillation ou une rotation continue. Notamment, EP4144903A1 et EP4219813A1 décrivent des machines de formation de la foule dans lesquelles chaque actionneur électrique entraîne le cadre de lisses correspondant par l'intermédiaire d'un mécanisme de tirage, comprenant un maneton, des bielles et des leviers, qui transforment la rotation produite par l'actionneur en une translation alternative du cadre de lisses.

En fonctionnement, le moteur doit s'arrêter et redémarrer à haute fréquence, en fonction de la position souhaitée pour le cadre à chaque coup de métier à tisser. Il est donc souhaitable que l'inertie de rotation du rotor du moteur soit minimale, afin d'éviter des vibrations excessives et une consommation d'énergie importante pour ces accélérations. De plus, l'espace disponible pour agencer les moteurs est relativement faible. Par conséquent, les actionneurs utilisés dans de telles machines de formation de la foule ont un couple relativement faible, du fait des contraintes sur l'inertie et l'encombrement. Or, il est souhaitable que le couple développé par les actionneurs soit suffisamment élevé, afin d'entraîner les cadres de lisses, qui peuvent être relativement lourds et sur lesquels les fils de chaîne tendus appliquent des efforts tendant à s'opposer à leur déplacement. De plus, la vitesse requise pour l'entraînement des cadres est en général inférieure à la vitesse nominale des moteurs, de sorte que les moteurs fonctionnent avec un rendement relativement faible.

Il est également connu de FR3004468A3 d'ajouter un réducteur en sortie du rotor d'un moteur d'une machine de formation de la foule. En pratique, cela permet d'obtenir un couple plus élevé en sortie du réducteur et donc d'adopter un régime de fonctionnement dans lequel le rendement du moteur est plus élevé. Toutefois, l'ajout d'un réducteur est onéreux, pose des problèmes d'encombrement et n'est pas non plus optimal en terme de rendement du fait des pertes liées au réducteur. Par ailleurs, l'inertie de l'ensemble motoréducteur est fortement augmentée à cause des pièces tournantes du réducteur, dont l'inertie de rotation s'ajoute à celle du rotor.

Le but de l'invention est donc de proposer une machine de formation de la foule dont le moment d'inertie est réduit, sans entraîner de hausse excessive de l'encombrement et du coût et sans abaisser le rendement et le couple nominal.

A cet effet, l'invention a pour objet une machine de formation de la foule, pour actionner un cadre de lisses d'un métier à tisser selon une course en translation alternative suivant un axe de cadre, la machine de formation de la foule comprenant :
- un moteur électrique rotatif, comprenant :
   - une carcasse, centrée sur un axe principal du moteur électrique rotatif et configurée pour être solidaire d'un bâti machine du métier à tisser,
   - un stator, solidaire de la carcasse,
   - un rotor, disposé dans le stator et comprenant une partie cylindrique, centrée sur l'axe principal et comprenant une paroi périphérique externe,
   - un premier roulement, disposé dans un premier plan, perpendiculaire à l'axe principal, d'un côté avant du moteur électrique rotatif, et
   - un deuxième roulement, disposé dans un deuxième plan, perpendiculaire à l'axe principal, d'un côté arrière du moteur électrique rotatif, le premier roulement et le deuxième roulement guidant une rotation du rotor par rapport au stator autour de l'axe principal ;
- une manivelle, solidaire du rotor et comprenant un maneton définissant un axe d'excentrique, parallèle à l'axe principal et distant de l'axe principal d'une distance d'entraxe d'excentrique ;
- un levier d'attaque, qui est configuré pour être pivotant autour d'un premier axe de levier par rapport au bâti machine, pour actionner le cadre de lisses, le premier axe de levier étant fixe par rapport à, et parallèle à, l'axe principal ; et
- une bielle d'attaque, qui comprend :
   - une première extrémité, attelée au maneton en étant pivotante autour de l'axe d'excentrique par rapport au maneton, et
   - une deuxième extrémité, attelée au levier d'attaque en étant pivotante autour d'un deuxième axe de levier par rapport au levier d'attaque, le deuxième axe de levier étant parallèle au premier axe de levier ;
caractérisé en ce que :
- le stator comprend :
   - des tôles de bobinage, entourant l'axe principal et s'étendant radialement entre un diamètre externe de stator et un diamètre interne de stator centrés sur l'axe principal, les tôles de bobinage formant des dents de bobinage distribuées autour de l'axe principal, dirigées vers l'axe principal et délimitant entre elles des encoches de stator, qui s'étendent parallèlement à l'axe principal, et
   - des bobinages électriques, chaque bobinage électrique étant enroulé autour de plusieurs des dents de bobinage en étant reçu dans les encoches de stator ; et
- le rotor comprend :
   - un arbre de rotor, centré sur l'axe principal, entouré par la partie cylindrique du rotor et étant solidaire de la partie cylindrique du rotor et de la manivelle, et
   - des aimants permanents, agencés sur la paroi périphérique externe de la partie cylindrique et étant répartis autour de l'axe principal, chaque aimant permanent comprenant une surface externe respective, les surfaces externes étant en regard des dents de bobinages et s'inscrivant sur un cercle de rotor, centré sur l'axe principal et définissant un diamètre de rotor ; et
- un rapport du diamètre externe de stator par rapport à une longueur de la partie cylindrique, mesurée parallèlement à l'axe principal sans dépasser les aimants permanents, est compris entre 2.0 et 4.0, de préférence compris entre 2.5 et 3.5 , de préférence encore compris entre 2.8 et 3.2.

Une idée à la base de l'invention est que le rotor comprenne, outre la partie cylindrique, un arbre de rotor, ce qui permet de réduire le moment d'inertie du rotor comparativement à l'art antérieur, dans la mesure où une proportion plus importante de la masse du rotor est rapprochée de l'axe principal en étant concentrée dans l'arbre de rotor plutôt que dans la partie cylindrique. Conserver la partie cylindrique permet néanmoins de conserver un bras de levier important pour que le champ électromagnétique imparti par le stator sur les aimants permanents du rotor, portés par la partie cylindrique, permette l'obtention d'un couple nominal relativement élevé. De plus, conserver la partie cylindrique permet de concevoir le moteur électrique rotatif tel que le diamètre externe de stator soit relativement grand, notamment plus grand que la longueur de la partie cylindrique, sans que l'augmentation du moment d'inertie ne soit trop importante. Le rapport entre le diamètre externe de stator et la longueur de la partie cylindrique confère alors au moteur électrique rotatif un couple nominal plus élevé et une vitesse de rotation nominale plus faible que dans l'art antérieur. Durant le fonctionnement, le moteur peut donc être utilisé sous un régime plus proche de son régime nominal, ce qui assure que le rendement est maximal. La manivelle étant directement solidaire de l'arbre de rotor, c'est-à-dire qu'aucun réducteur mécanique n'est prévu entre le rotor et la manivelle, l'encombrement, l'inertie de rotation et le coût ne sont pas excessifs.

Suivant d'autres aspects avantageux de l'invention, l'invention comprend une ou plusieurs des caractéristiques suivantes, prises isolément ou suivant toutes les combinaisons techniquement possibles :
- Le rotor comprend un premier ensemble d'aimants permanents, comprenant 12 à 40 aimants permanents, de préférence de 30 à 35 aimants permanents, de préférence 30 aimants permanents, répartis équitablement autour de l'axe principal, et le stator comprend 24 à 48 encoches, de préférence 32 à 40 encoches, de préférence encore 36 encoches, réparties équitablement autour de l'axe principal.
- Le rotor comprend un deuxième ensemble d'aimants permanents, décalé par rapport au premier ensemble d'aimants permanents suivant l'axe principal, chaque aimant permanent du deuxième ensemble d'aimants permanents étant adjacent à l'un des aimants permanents du premier ensemble d'aimants permanents, suivant l'axe principal, et chaque aimant permanent du premier ensemble d'aimants permanents est angulairement décalé, autour de l'axe principal, par rapport à l'aimant permanent du deuxième ensemble d'aimants permanents qui lui est adjacent, d'un angle de 0.5 à 5 degrés, de préférence 1 à 2 degrés, de préférence encore 1 degré.
- Le diamètre externe de stator mesure entre 160 et 200 mm, de préférence entre 170 et 190 mm, de préférence encore entre 175 et 185 mm.
- Le rotor est conçu pour qu'un moment d'inertie du rotor soit inférieur à 100 kg.cm², de préférence inférieur à 90 kg.cm², de préférence inférieur à 80 kg.cm².
- La machine de formation de la foule comprend une armoire électrique, comprenant un circuit électrique de puissance configuré pour alimenter électriquement le moteur électrique rotatif et en ce que le moteur électrique rotatif développe un couple nominal compris entre 30 et 100 Nm, de préférence compris 50 et 70 Nm, de préférence compris entre 60 et 70 Nm.
- Le circuit électrique de puissance délivre un courant d'alimentation d'intensité I au moteur électrique rotatif qui développe un couple rapporté par unité de courant I compris entre 6.5 et 8 Nm/A, de préférence compris entre 7 et 7.5 N.m/A, lorsque la vitesse de rotation du rotor est maintenue à 750 tours par minute.
- Il est prévu que (i) chaque dent de bobinage comprend :
   - une tête de dent, délimitée par le diamètre interne de stator,
   - un pied de dent, délimité par le diamètre externe de stator, et
   - un corps de dent, qui s'étend perpendiculairement à l'axe principal, qui relie la tête de dent au pied de dent et qui présente une forme générale rectangulaire en projection dans le premier plan, chaque corps de dent ayant une longueur, mesurée radialement par rapport à l'axe principal, comprise entre 19 et 25 mm, de préférence entre 20 et 23mm, de préférence entre 21 et 23 mm ; et que (ii) chaque bobinage électrique forme trois couches de fil autour de la dent de bobinage autour de laquelle ledit bobinage électrique est enroulé.
- L'arbre de rotor comprend une pièce monobloc qui s'étend de façon à relier le premier plan et le deuxième plan.
- Le rotor comprend un disque, s'étendant perpendiculairement à l'axe principal, comprenant des évidements distribués autour de l'axe principal et un alésage central, par l'intermédiaire duquel le disque est emmanché sur l'arbre de rotor, et la partie cylindrique est solidaire de l'arbre de rotor et du disque et entoure le disque.
- L'arbre de rotor comprend une paroi de centrage, coopérant avec l'alésage central pour centrer le disque sur l'arbre de rotor, et un collet, s'étendant radialement à l'axe principal et étant agencé entre le premier plan et le deuxième plan, le disque étant fixé au collet au moyen d'au moins une vis parallèle à l'axe principal.
- Il est prévu que (i) la manivelle comprend :
   - une base, solidaire de l'arbre de rotor, et
   - une pièce de liaison, solidaire du maneton et montée sur la base ; et que (ii) la machine de formation de la foule comprend un système de réglage, qui comprend des moyens de verrouillage, configurés pour :
   - autoriser le réglage de la distance d'entraxe d'excentrique, par un déplacement relatif entre la base et la pièce de liaison, dans une configuration de réglage du système de réglage, et
   - solidariser la base avec la pièce de liaison, dans une configuration verrouillée du système de réglage.
- La base comprend une rainure came, définissant une spirale autour de l'axe principal, et la pièce de liaison comprend un doigt suiveur circulant le long de la rainure came pour guider la pièce de liaison par rapport à la base lorsque le système de réglage est en configuration de réglage et ainsi faire varier la distance d'entraxe d'excentrique.
- La pièce de liaison et la base sont pivotantes l'une par rapport à l'autre autour d'un axe de manivelle parallèle à l'axe principal, lorsque le système de réglage est en configuration de réglage.
- Il est prévu que (i) une course de rotation sans changement de sens du rotor autour de l'axe principal correspond à une course d'oscillation du levier d'attaque autour du premier axe de levier, la course d'oscillation incluant une orientation de cadre haut, une orientation de croisement et une orientation de cadre bas du levier d'attaque, l'orientation de croisement étant médiane entre l'orientation de cadre haut et l'orientation de cadre bas ; et que
   (ii) le moteur électrique rotatif comprend des moyens de blocage, qui permettent :
   - une configuration de blocage, dans laquelle les moyens de blocage immobilisent le rotor par rapport au stator autour de l'axe principal, sélectivement selon plusieurs orientations de référence prédéterminées, dont :
      ◊ une orientation de réglage d'amplitude de foule, dans laquelle le levier d'attaque est dans l'orientation de cadre haut ou dans l'orientation de cadre bas, et
      ◊ une orientation de réglage de hauteur de foule, à 90 degrés par rapport à l'orientation de réglage d'amplitude de foule et dans laquelle le levier d'attaque est dans l'orientation de croisement ; et
   - une configuration de libération, dans laquelle les moyens de blocage autorisent la rotation du rotor autour de l'axe principal par rapport au stator.
- Les moyens de blocage comprennent une goupille de blocage, mobile par rapport au stator selon une direction parallèle à l'axe principal, un premier cran, appartenant au rotor et coopérant avec la goupille de blocage dans la configuration de blocage, pour immobiliser le rotor dans l'orientation de réglage d'amplitude de foule, et un deuxième cran, appartenant au rotor et coopérant avec la goupille de blocage dans la configuration de blocage, pour immobiliser le rotor dans l'orientation de réglage de hauteur de foule.
- La machine de formation de la foule est agencée de sorte que, lorsque le moteur électrique rotatif est en configuration de blocage avec le rotor dans l'orientation de réglage d'amplitude de foule, alors l'axe principal, l'axe d'excentrique et le deuxième axe de levier sont sensiblement coplanaires.
- La machine de formation de la foule comprend :
   - un flasque avant, solidaire de la carcasse et comprenant une bride circulaire, configurée pour coopérer avec le bâti machine, pour que la carcasse puisse être positionnée sur le bâti machine ;
   - des moyens de fixation du moteur électrique rotatif sur le bâti machine, pour fixer le moteur électrique rotatif au bâti machine lorsque la bride circulaire coopère avec le bâti machine ; et
   - un moyen d'indexage, qui est distinct des moyens de fixation et qui impose que, lorsque la bride circulaire coopère avec le bâti machine, la carcasse soit positionnée de sorte que :
      - le levier d'attaque soit dans l'orientation de cadre haut ou dans l'orientation de cadre bas lorsque le rotor est dans l'orientation de réglage d'amplitude de foule en configuration de blocage, et
      - le levier d'attaque soit dans l'orientation de croisement lorsque le rotor est dans l'orientation de réglage de hauteur de foule en configuration de blocage.
- Le premier axe de levier et le deuxième axe de levier sont reliés par une droite de bras de levier perpendiculaire au deuxième axe de levier ; l'axe d'excentrique et le deuxième axe de levier sont reliés par une droite de bielle perpendiculaire au deuxième axe de levier et définissant un angle bielle-levier avec la droite de bras de levier ; et l'angle bielle-levier vaut 97 degrés, à plus ou moins 2 degrés, lorsque le levier d'attaque est dans l'orientation de croisement.

L'invention a également pour objet un ensemble de formation de la foule, comprenant un groupe de machines de formation de la foule telles que définies ci-dessus et dans lequel :
- chaque machine de formation de la foule du groupe définit une distance de bras de levier, mesurée entre le premier axe de levier et le deuxième axe de levier ;
- la distance de bras de levier de chaque machine de formation de la foule du groupe est égale à la distance de bras de levier de chaque autre machine de formation de la foule du groupe ; et
- lorsque les machines de formation de la foule du groupe sont en configuration de blocage avec le rotor dans l'une des orientations de référence, alors les axes principaux, les axes d'excentrique et les deuxièmes axes de levier respectifs des machines de formation de la foule du groupe sont coplanaires.

L'invention apparaîtra plus clairement à la lecture de la description suivante, donnée uniquement à titre d'exemple non limitatif et faite en référence aux dessins annexés dans lesquels :
[Fig. 1] la figure 1 est une vue d'un côté d'un ensemble de formation de la foule comprenant plusieurs groupes de machines de formation de la foule montées sur un bâti machine, selon un premier mode de réalisation de l'invention, un levier d'attaque et une bielle d'attaque appartenant à l'une des machines de formation de la foule et entraînant un cadre de lisses étant montrés, le levier d'attaque étant d'un premier type.
[Fig. 2] la figure 2 est une vue d'un côté opposé de l'ensemble de formation de la foule de la figure 1, un levier d'attaque et une bielle d'attaque appartenant à une autre des machines de formation de la foule et entraînant un autre cadre de lisses étant montrés, le levier d'attaque étant d'un deuxième type.
[Fig. 3] la figure 3 est une vue en coupe longitudinale de l'une des machines de formation de la foule des figures 1 et 2, centrée sur un axe principal appartenant au moteur électrique rotatif de cette machine de formation de la foule.
[Fig. 4] la figure 4 est une vue de face partielle de la machine de formation de la foule de la figure 3, où la bielle d'attaque est omise.
[Fig. 5] la figure 5 est une vue similaire à celle de la figure 3, où le moteur électrique rotatif est dans une configuration de blocage et reçoit un outil de réglage.
[Fig. 6] la figure 6 est une vue en perspective d'un côté arrière de la machine de formation de la foule des figures 3 à 5, avec l'outil de réglage de la figure 5, la machine de formation de la foule étant en configuration de blocage et étant montée sur le bâti machine.
[Fig. 7] la figure 7 est une vue en coupe transversale d'un stator du moteur électrique rotatif des figures précédentes.
[Fig. 8] la figure 8 montre un détail B de la figure 7.
[Fig. 9] la figure 9 est une vue éclatée en perspective d'une partie du moteur électrique rotatif et d'une partie d'une manivelle appartenant à la machine de formation de la foule des figures précédentes.
[Fig. 10] la figure 10 est une vue similaire à celle de la figure 1, dans laquelle une partie de l'ensemble de formation de la foule est omise et dans laquelle un levier d'attaque et une bielle d'attaque appartenant à une autre des machines de formation de la foule et entraînant un autre cadre de lisses sont montrés, le levier d'attaque étant d'un troisième type.
[Fig. 11] la figure 11 est une vue similaire à celle de la figure 1, dans laquelle une partie de l'ensemble de formation de la foule est omise et dans laquelle un levier d'attaque et une bielle d'attaque appartenant à une autre des machines de formation de la foule et entraînant un autre cadre de lisses sont montrés, le levier d'attaque étant d'un quatrième type.
[Fig. 12] la figure 12 est une vue similaire à celle de la figure 1, dans laquelle une partie de l'ensemble de formation de la foule est omise et dans laquelle un levier d'attaque et une bielle d'attaque appartenant à une autre des machines de formation de la foule et entraînant un autre cadre de lisses sont montrés, le levier d'attaque étant d'un cinquième type.
[Fig. 13] la figure 13 est une vue similaire à celle de la figure 1, dans laquelle une partie de l'ensemble de formation de la foule est omise et dans laquelle un levier d'attaque et une bielle d'attaque appartenant à une autre des machines de formation de la foule et entraînant un autre cadre de lisses sont montrés, le levier d'attaque étant d'un sixième type.
[Fig. 14] la figure 14 est une vue similaire à celle de la figure 1, dans laquelle une partie de l'ensemble de formation de la foule est omise et dans laquelle un levier d'attaque et une bielle d'attaque appartenant à une autre des machines de formation de la foule et entraînant un autre cadre de lisses sont montrés, le levier d'attaque étant d'un septième type.
[Fig. 15] la figure 15 est une vue similaire à celle des figures 10 à 14, d'un ensemble de formation de la foule comprenant des groupes de machines de formation de la foule, selon un second mode de réalisation de l'invention.
[Fig. 16] la figure 16 est une vue en coupe similaire à celle de la figure 3 d'une machines de formation de la foule selon un troisième mode de réalisation de l'invention.
[Fig. 17] la figure 17 est une vue de face similaire à celle de la figure 4, de la machine de formation de la foule de la figure 16.
[Fig. 18] la figure 18 est une vue éclatée en perspective de la machine de formation de la foule des figures 16 et 17.
[Fig. 19] la figure 19 est une vue en coupe similaire à celle de la figure 3 d'une machine de formation de la foule selon un quatrième mode de réalisation de l'invention.
[Fig. 20] la figure 20 est une vue de face similaire à celle de la figure 4, de la machine de formation de la foule de la figure 19.
[Fig. 21] la figure 21 est une vue en perspective d'une manivelle appartenant à une machine de formation de la foule selon un cinquième mode de réalisation de l'invention.

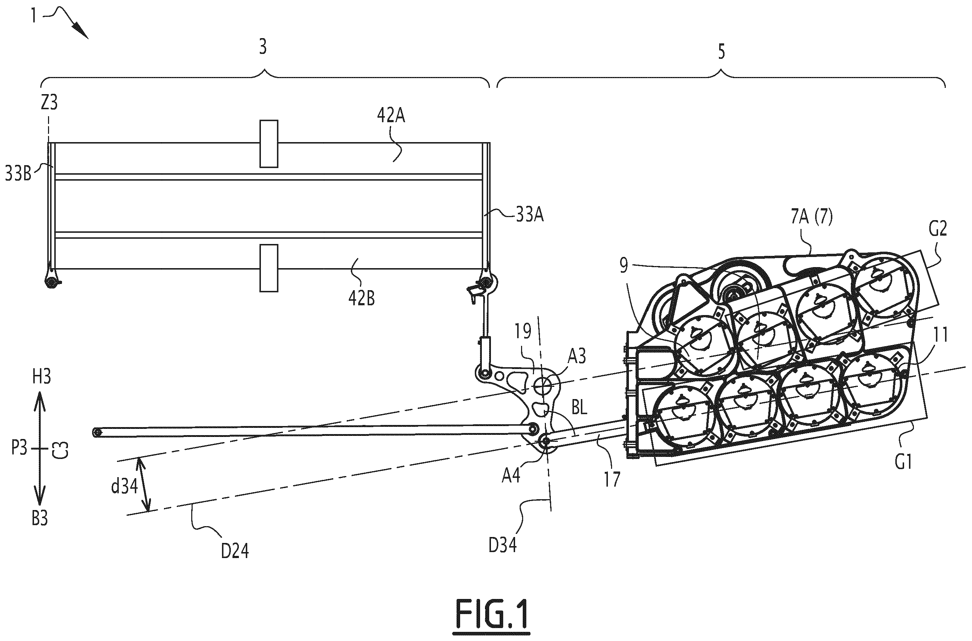

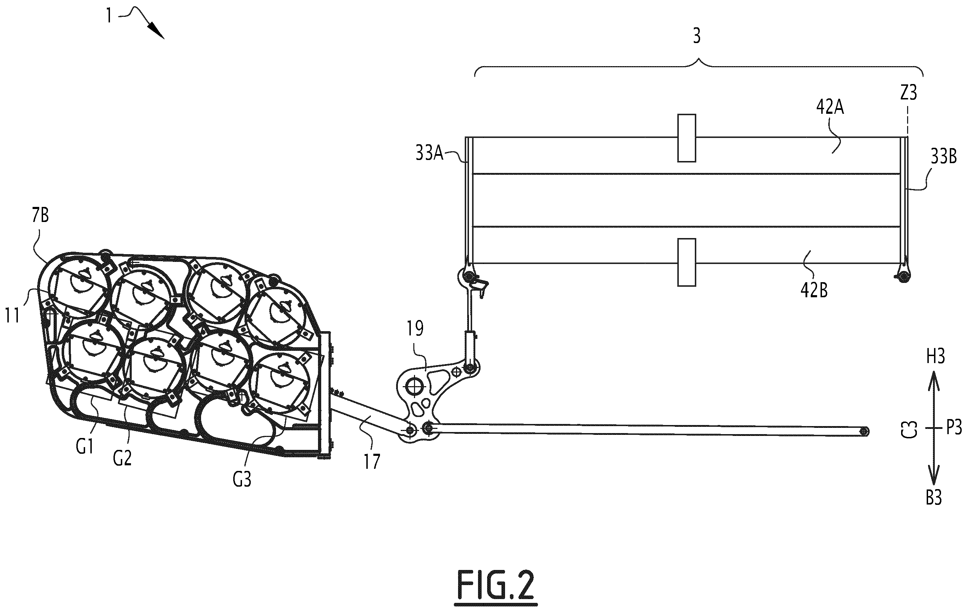

On considère un métier à tisser 1, partiellement représenté sur les figures 1 et 2, selon un premier mode de réalisation de l'invention. Le métier à tisser 1 comprend des cadres de lisses 3 et un ensemble de formation de la foule 5 servant à actionner les cadres de lisses 3.

L'ensemble de formation de la foule 5 comprend un bâti 7, fixe dans le référentiel terrestre, et des machines de formations de la foule 9. Sur chacune des figures 1 et 2, un seul cadre 3 est représenté. Les machines de formation de la foule 9 sont partiellement représentées, sauf celle actionnant ce cadre 3, qui est entièrement représentée.

Ici, on prévoit seize machines de formation de la foule 9 et seize cadres de lisses 3, chaque machine de formation de la foule 9 actionnant respectivement l'un des cadres 3. En variante, on peut prévoir qu'une même machine de formation de la foule 9 actionne plusieurs cadres de lisses 3. Les cadres de lisses 3 sont superposés suivant une direction perpendiculaire aux cadres de lisses 3 et décalés entre eux d'une distance d'environ 12mm suivant cette direction, par exemple.

Chaque cadre 3 comprend avantageusement une traverse supérieure 42A, une traverse inférieure 42B, parallèle à la traverse 42A et deux montants 33A et 33B, parallèles entre eux et reliant les traverses 42A et 42B. De préférence, les traverses 42A et 42B sont horizontales alors que les montants 33A et 33B sont verticaux. Les traverses 42A et 42B mesurent environ 2m de longueur. Chaque cadre de lisses 3 est équipé d'une rangée de lisses, non représentées, reliant chacune les traverses 42A et 42B et étant agencées entre les montants 33A et 33B, en étant réparties le long des traverses 42A et 42B. Les lisses portent chacune un œillet traversé par un fil de chaîne, les fils de chaîne formant une nappe de fils de chaîne. Par exemple, chaque cadre de lisses 3 a une masse d'environ 7kg et est soumis à des efforts de tension des fils de chaîne ajoutant une charge équivalente d'environ 50%. Le métier à tisser 1 inclut avantageusement d'autres composants, tels qu'un battant, des moyens d'insertion d'un fil de trame, un délivreur de trame qui ne sont pas représentés.

Aux fins d'effectuer un tissage, chaque machine de formation de la foule 9 est conçue pour actionner le cadre de lisses 3 correspondant selon une course en translation alternative C3, par rapportau bâti 7, suivant un axe de cadre Z3 propre à ce cadre 3. Par « course », il est fait référence à la trajectoire parcourue par le cadre 3 lors de son déplacement. Etant déplacé par la machine 9 le long de la course C3, le cadre 3 est déplacé parallèlement à l'axe Z3, selon un mouvement rectiligne, en faisant des allers-retours entre une position extrémale haute H3, correspondant à une borne supérieure de la course C3, et une position extrémale basse B3, correspondant à une borne inférieure de la course C3. Par exemple, la course C3 a une amplitude de référence de l'ordre de 100 mm, cette amplitude étant avantageusement réglable, comme expliqué ci-après. L'axe Z3, et donc le déplacement du cadre 3, est préférentiellement vertical, ou pour le moins parallèle aux lisses du cadre 3 considéré. On définit la position de référence P3 comme étant une position centrale, qui peut correspondre à la position de croisure du métier à tisser 1 pour l'ensemble des nappes de fils de chaine dont les courses sont centrées par rapport à un plan central comprenant les oeillets de lisse des cadres en position P3.

Durant le tissage, pour l'insertion de chaque fil de trame, la position des cadres 3 le long de leur course C3 respective est déterminée par l'action des machines 9, de façon indépendante pour chaque cadre 3, pour définir la foule du métier à tisser 1 recevant le fil de trame inséré. Le métier 1 produit alors un tissu de fils de chaîne et de fils de trame avec une armure souhaitée.

Le bâti 7 est préférentiellement un ensemble de pièces soudées ou autrement assemblées, fixe par rapport au sol et disposé à une extrémité des cadres de lisses 3. Le bâti 7 comprend deux parties 7A et 7B, la partie 7A étant mieux visible sur la figure 1 et la partie 7B étant mieux visible sur la figure 2. Les parties 7A et 7B sont agencées parallèlement l'une par rapport à l'autre et aux cadres de lisses 3 et se font face. Chaque partie 7A ou 7B comprend des emplacements 11, chaque emplacement 11 recevant l'une des machines de formation de la foule 9, qui est ainsi fixée au bâti 7. Ici, chaque sous-ensemble 7A ou 7B comprend huit emplacements 11, recevant respectivement huit des machines 9.

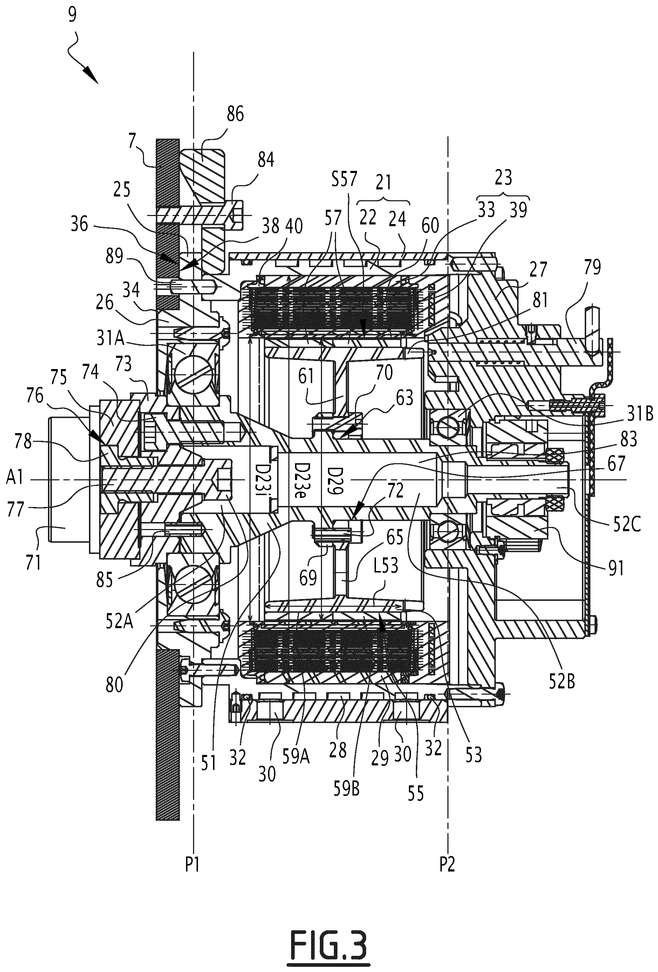

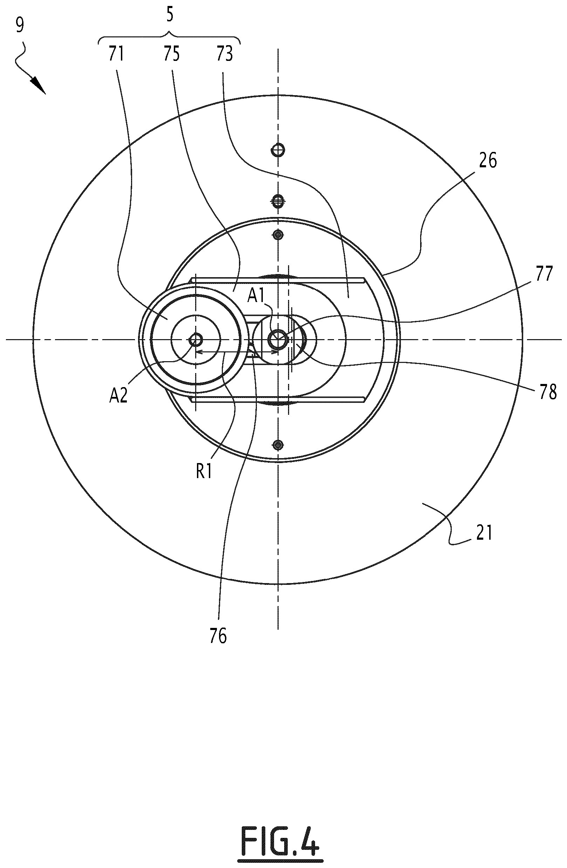

Chaque machine de formation de la foule 9 comprend un moteur électrique rotatif 13 et une manivelle 15, visibles plus en détails sur les figures 3 et 4, ainsi qu'une bielle d'attaque 17 et un levier d'attaque 19, visibles sur les figures 1 et 2, par l'intermédiaire desquels le moteur 13 actionne le cadre 3. Les moteurs électriques rotatifs 13 et les manivelles 15 des seize machines de formation de la foule 9 sont avantageusement identiques entre eux, ou essentiellement similaires les unes par rapport aux autres.

Chaque machine de formation de la foule 9 comporte préférentiellement un système de réglage permettant de régler d'une part la hauteur de foule, c'est-à-dire la position de référence P3 par rapport au sol, et d'autre part l'amplitude de foule, c'est-à-dire l'amplitude de la course C3, c'est-à-dire la distance entre la position extrémale haute H3 et la position extrémale basse B3 prise par le cadre 3 lorsqu'il est entraîné sous l'action du moteur électrique rotatif 13.

Chaque moteur électrique rotatif 13 est préférentiellement contrôlé par un microcontrôleur contenu dans une armoire de commande, non représentée. L'armoire de commande comprend par exemple une unité centrale, comprenant elle-même un contrôleur maître, qui échange des données avec chaque microcontrôleur de chaque machine de formation de la foule 9. Le métier à tisser 1 comprend avantageusement un terminal permettant à un tisseur d'appliquer des réglages différents au métier 1, en fonction des articles de tissage souhaités. En pratique, le tisseur choisit un programme de tissage d'un article via le terminal, avec une armure, une vitesse et un profil prédéterminés. Cette consigne est transmise à l'unité centrale, qui les convertit en consignes de position pour les moteurs électriques rotatifs 13 de chaque machine de formation de la foule 9. Les consignes de position sont transmises au microcontrôleur associé puis au moteur électrique rotatif 13 par l'intermédiaire d'un circuit électrique de puissance.

Comme bien visible sur les figures 3 et 4, le moteur électrique rotatif 13 comprend une carcasse 21, un stator 23, un rotor 29, un premier roulement 31A et un deuxième roulement 31B. On définit un premier plan P1 dans lequel s'étend le premier roulement 31A et un deuxième plan P2 dans lequel s'étend le deuxième roulement 31B.

Le moteur électrique rotatif 13 est un moteur synchrone à aimants permanents dont la structure est détaillée dans ce qui suit. Le choix de cette technologie de moteur cumule plusieurs avantages pour l'application, notamment un contrôle précis de la vitesse et du couple offrant un contrôle fin du cadre 3, une construction et une maintenance simplifiée grâce au fait que le rotor 29 est dépourvu de bobinages, ainsi que la possibilité de maintenir un couple élevé même à basse vitesse, ce qui permet de s'affranchir d'un réducteur entre le rotor 29 et la manivelle 15.

La carcasse 21 constitue l'interface du moteur électrique rotatif 13 par rapport au bâti 7 en étant fixée sur l'un des emplacements 11. La carcasse 21 est centrée sur un axe principal A1 du moteur 13, qui est perpendiculaire et fixe par rapport à l'axe de cadre Z3.

Avantageusement, la carcasse 21 inclut une partie périphérique interne 22, une partie périphérique externe 24, un flasque avant 25 et un flasque arrière 27. La partie périphérique interne 22 entoure l'axe principal A1 et est solidarisée au flasque avant 25 et au flasque arrière 27. Les flasques 25 et 27 sont perpendiculaires à l'axe principal A1, et ferment des extrémités axiales de la partie périphérique interne 22. La partie périphérique externe 24 enveloppe la partie périphérique interne 22.

Les parties 22 et 24 délimitent avantageusement entre elles un canal hélicoïdal 28, centré sur l'axe A1, constitutif d'un circuit de refroidissement, destiné à guider la circulation d'un liquide caloporteur dans l'épaisseur de la carcasse 21, pour refroidir le moteur 13. La partie périphérique externe 24 comporte deux canaux radiaux 30 fluidiquement connectés à des extrémités respectives du canal hélicoïdal 28, respectivement pour alimenter le canal hélicoïdal 28 en liquide caloporteur et évacuer le liquide caloporteur dudit canal hélicoïdal. La carcasse 21 inclut préférentiellement deux joints 32, interposés radialement entre la partie périphérique interne 22 et la partie périphérique externe 24, en étant disposés axialement de part et d'autre des canaux 28 et 30, afin de contenir le liquide caloporteur à l'intérieur de la carcasse 21. Les canaux radiaux 30 sont reliés à un circuit de refroidissement, préférentiellement commun à toutes les machines 9, qui comprend des tubes, une pompe de mise en circulation du fluide caloporteur dans le circuit de refroidissement, un dispositif de dissipation thermique et une cuve.

Avantageusement, le flasque avant 25 est fixé par des vis à la partie périphérique interne 25. Le flasque avant 25 comprend une bride circulaire 26, coopérant avec le bâti 7, permettant de positionner la carcasse 21 sur le bâti 7. En particulier, à l'emplacement 11, le bâti 7 forme une ouverture circulaire 34 complémentaire à la bride circulaire 26, et qui reçoit coaxialement la bride circulaire 26, sans contraindre l'orientation de la bride circulaire 26, et donc de la carcasse 21, autour de l'axe A1, par rapport au bâti 7. La carcasse 21 vient aussi en appui vers l'avant suivant l'axe A1 contre le bâti 7, par mise en contact d'une face d'appui 36 du flasque avant 25 contre une face 38 correspondante du bâti 7, entourant l'ouverture circulaire 34, à l'emplacement 11. La machine 9 comprend en outre, un moyen d'indexage, permettant d'imposer l'orientation de la carcasse 21 par rapport au bâti 7 autour de l'axe A1. Par exemple, le moyen d'indexage inclut une goupille d'indexage 89, qui est reçue à la fois dans un orifice formé dans le flasque avant 25, parallèlement et à distance de l'axe A1, et dans un orifice correspondant formé à l'emplacement 11 du bâti 7, formé à la périphérie de l'ouverture circulaire 34. Le moyen d'indexage peut être considéré comme un détrompeur en rotation, imposant une seule orientation de la carcasse 21 par rapport au bâti 7 autour de l'axe A1. Cela permet de positionner le moteur 9 dans une position particulière dans laquelle le rendement mécanique de la transmission formée par la manivelle 15, la bielle 17 et le levier 19 est optimal, et dans laquelle ces éléments prennent une position particulière facilitant le réglage de hauteur de foule ou d'amplitude de foule, comme cela est expliqué par la suite.

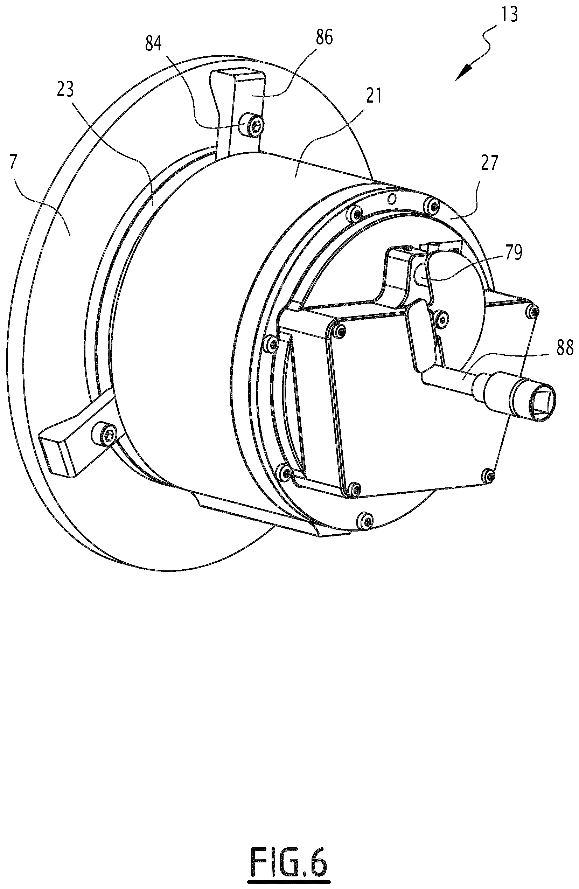

Outre le moyen d'indexage susmentionné, la machine 9 comprend des moyens de fixation, bien visibles également sur la figure 6, pour fixer le moteur 13 sur le bâti 7. Par exemple, les moyens de fixation sont constitués par des vis 84, qui traversent une bride à vis 86 appartenant à la carcasse 21 et sont vissées dans le bati 7 pour fixer le moteur 13 sur le bâti 7.

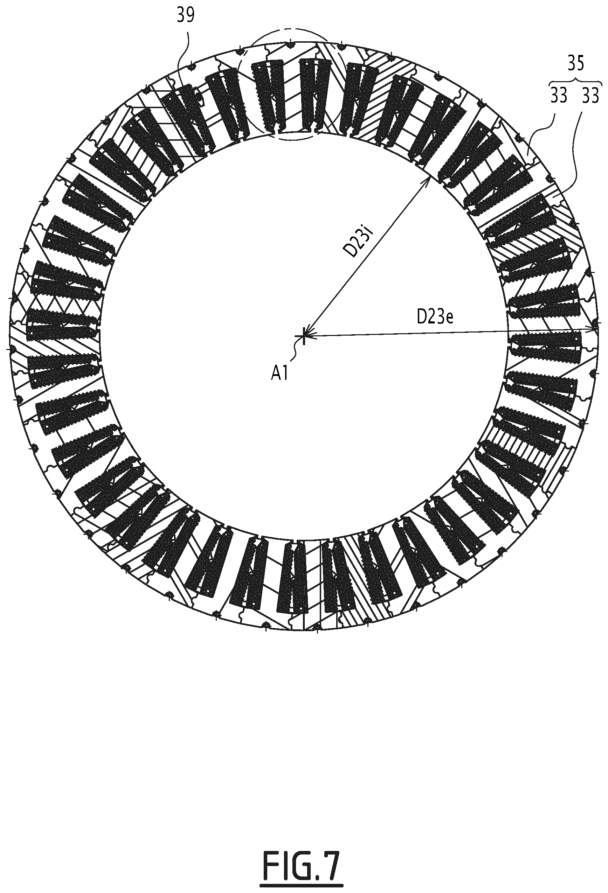

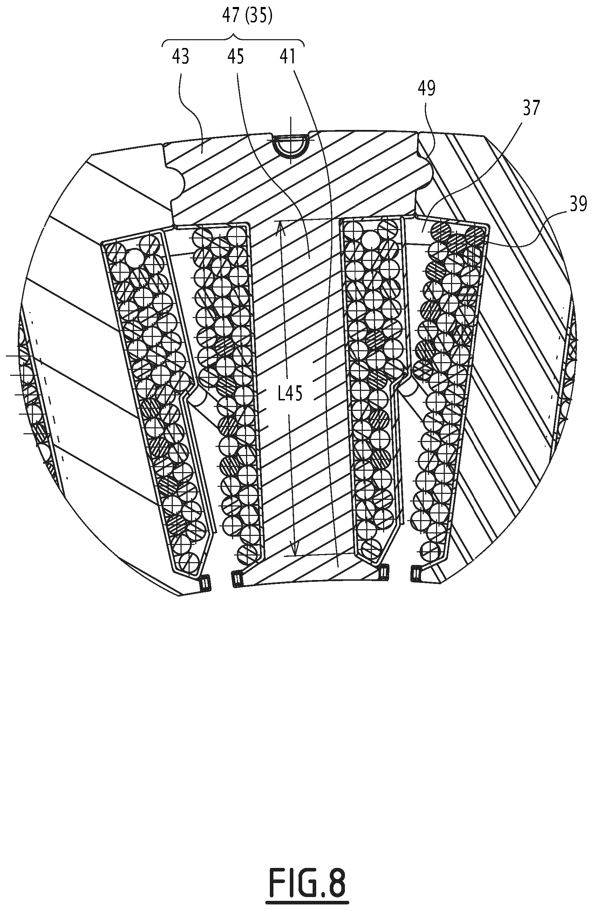

Le stator 23, visible sur la figure 3 et montré individuellement sur les figures 7 et 8, est fixement solidaire de la carcasse 21, en étant enfermé à l'intérieur de la carcasse 21. Avec la carcasse 21, le stator 23 représente la partie fixe du moteur électrique rotatif 13. Le stator 23 a pour fonction de générer un champ magnétique lorsque le moteur électrique rotatif 13 est alimenté par le circuit de puissance précité provenant de l'armoire de commande.

A cet effet, le stator 23 comprend des tôles de bobinage 33, des dents de bobinage 35 et des bobinages électriques 39, ainsi que, de préférence, deux embouts plastiques 40.

Les tôles de bobinage 33, visibles sur les figures 3 et 7, présentent chacune une forme de couronne entourant l'axe principal A1. Chaque tôle de bobinage 33 est de forme plate, perpendiculairment à l'axe principal A1. Les tôles de bobinages 33 sont empilées suivant l'axe principal A1, pour former ensemble un noyau ferromagnétique du moteur 13, de forme tubulaire autour de l'axe principal A1. Le stator 23 est fixé à la partie interne 24 de la carcasse 21 par l'intermédiaire des tôles 33. Chaque tôles de bobinage 33 s'étendent radialement entre un diamètre externe de stator D23e et un diamètre interne de stator D23i, centrés sur l'axe principal A1.

Les deux embouts plastiques 40 sont positionnés respectivement à chaque extrémité axiale du noyau de bobinage constitué par les tôles de bobinage 33.

Avantageusement, et comme représenté sur la figure 8, chaque tôle de bobinage 33 est constituée de plusieurs tôles de dents 47 contiguës, orientées radialement et réparties équitablement autour de l'axe principal A1. Chaque tôle de dent 47 comporte un relief 49 coopérant avec un relief complémentaire de la tôle de dent 47 adjacente appartenant à la même tôle 33, lesdits reliefs positionnant les tôles de dent 47 adjacentes l'une par rapport à l'autre. Ainsi, la fabrication du stator 23 est simplifiée et est optimale en terme de quantité de matière utilisée, notamment par rapport à un usinage en bloc qui nécessiterait un temps de réalisation plus important et entraînerait des pertes de matière liées à l'enlèvement d'une partie centrale.

Les dents de bobinage 35, dont l'une est montrée plus en détails sur la figure 8, sont formées par les tôles de bobinage 33. Chaque dent de bobinage 35 est formée par l'empilement de plusieurs tôles de dent 47 alignées suivant l'axe principal A1. Chaque tôle de dent 47 appartient à une seule dent de bobinage 35. Les tôles de dents sont avantageusement réalisées en acier.

Les dents de bobinage 35, sont dirigées vers l'axe principal A1. Les dents 35 délimitent entre elles les encoches de stator 37, qui s'étendent parallèlement à l'axe principal A1 et sont ouvertes en direction de l'axe principal A1. Chaque encoche 37 est délimitée entre deux dents 35 successives, par ces deux dents 35. Avantageusement, chaque dent de bobinage 35 comprend une tête de dent 41, délimitée par le diamètre interne de stator D23i, un pied de dents 43, délimité par le diamètre externe de stator D23e, et un corps de dent 45, qui s'étend perpendiculairement à l'axe principal A1, qui relie la tête de dent 41 au pied de dent 43. L'encoche de stator 37 est formée entre les deux têtes de dent 41 adjacentes. Comme bien visible sur la figure 8, le corps de dent 45 présente une forme générale rectangulaire en projection dans un plan transversal du stator 23. Le corps de dent 45 présente également une longueur L45, mesurée radialement par rapport à l'axe principal A1, comprise entre 19 et 25 mm, de préférence entre 20 et 23 mm, de préférence entre 21 et 23mm.

Avantageusement, le diamètre externe de stator D23e mesure entre 160 et 200 mm, de préférence entre 170 et 190 mm, de préférence encore entre 165 et 185 mm. Avantageusement, l'utilisation d'un moteur à grand diamètre externe de stator D23e permet la réalisation d'un circuit électromagnétique qui exploite la distance à l'axe principal A1 du moteur 13, et favorise l'application d'un bras de levier des forces d'entrainement du rotor 51 par le stator 37 sur une distance élevée. Autrement dit, le diamètre externe de stator D23e confère un couple nominal important au moteur 13 de la machine de formation de la foule. Avantageusement, les encoches de stator 37 sont au nombre de 24 à 48, de préférence 32 à 40, de préférence encore 36, et sont réparties équitablement autour de l'axe principal A1. Avantageusement, les encoches de stator 37 ont une largeur de 5,5 mm, mesurée orthoradialement, et une hauteur de 22,1 mm, mesurée radialement. Ces dimensions permettent un compromis optimal entre le couple du moteur électrique rotatif 13 et son encombrement.

Chaque bobinage électrique 39 est enroulé autour des dents de bobinage 35 en étant reçu dans les encoches de stator 37. Les bobinages électriques 39 sont avantageusement au nombre de trois et s'enroulent chacun autour de dix dents de bobinage 35 réparties équitablement autour de l'axe principal A1. Les embouts plastiques 40 protègent mécaniquement les bobinages électriques 39 dans leur enroulement, afin qu'ils ne soient pas coupés par les tôles 33, aux extrémités axiales du noyau. Chaque bobinage électrique 39 forme trois couches. Parmi ces trois couches, la première couche a avantageusement 17 tours de fil conducteur, autour de la dent de bobinage 35 autour de laquelle ledit bobinage électrique 39 est enroulé. La seconde couche a préférentiellement 15 tours de fil. La troisième couche a préférentiellement 8 tours de fils conducteur. De cette façon, la longueur de fil utilisée est optimisée pour obtenir un champ magnétique, et donc un couple électromagnétique, suffisant pour l'application, tout en limitant les dissipations thermiques le long du fil, afin d'améliorer le rendement du moteur électrique rotatif 13. Les diamètres des fils sont préférentiellement choisis de l'ordre de 1,12 mm, ce qui est aussi compatible avec les performances attendues tout en minimisant l'échauffement du stator 29 grâce à une dissipation thermique suffisante dans les encoches de stator 37.

Le moteur 13 comprend avantageusement un bornier, non représenté, solidaire de la carcasse 21, auquel les bobinages 39 sont électriquement reliés. Le bornier permet de connecter électriquement le moteur 13 au circuit de puissance précité provenant de l'armoire de commande. Lorsque le moteur 13 est alimenté, un courant électrique circulant dans les bobinages 39 génère le champ magnétique.

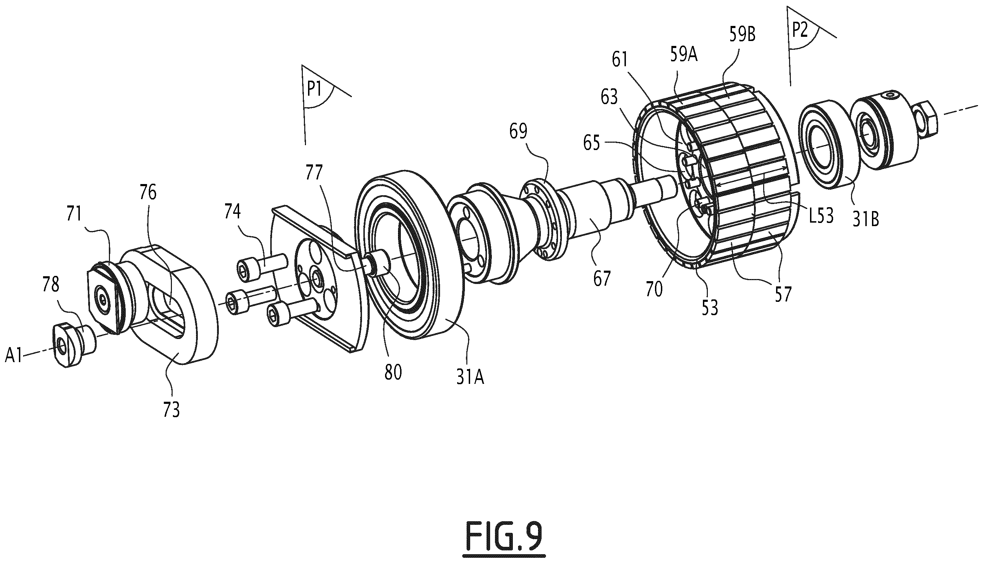

Comme montré sur les figures 3 et 9, les roulements 31A et 31B sont coaxiaux à l'axe A1 et sont montés dans le stator 23. En particulier, le roulement 31A est monté sur le flasque avant 25 et le roulement 31B est monté sur le flasque arrière 27. Le premier roulement 31A, situé du côté avant où le moteur 13 est chargé, est environ deux fois plus gros que le deuxième roulement 31B, afin de supporter des efforts dynamiques plus importants du côté avant du moteur 13. Préférentiellement, le premier plan P1 et le deuxième plan P2 sont distants de moins de 120mm.

Le rotor 29 est disposé dans le stator 23 et est monté pivotant par rapport au stator 23 autour de l'axe principal A1 par l'intermédiaire des roulements 31A et 31B. Le rotor 29, visible notamment sur les figures 3 et 9, est disposé dans le stator 23 et comprend un arbre de rotor 51, une partie cylindrique 53 et des aimants permanents 57. L'arbre de rotor 51 est centré sur l'axe principal A1 et est reçu dans les roulements 31A et 31B, à des extrémités de l'arbre de rotor 51. En particulier, l'arbre de rotor 51 traverse chacun des deux roulements 31A et 31B. Le rotor 29 est donc guidé en rotation par les roulements 31A et 31B par l'intermédiaire de l'arbre de rotor 51. Avantageusement, l'arbre de rotor 51 comprend une pièce monobloc, qui s'étend de façon à relier le premier plan P1 et le deuxième plan P2. La pièce monobloc est en particulier reçue dans chacun des roulements 31A et 31B. Dans le présent exemple, l'arbre de rotor 51 est constitué de cette seule pièce monobloc. Cela permet d'optimiser la coaxialité du rotor 29 et du stator 23, contrairement à un rotor en plusieurs pièces, susceptible de causer des décalages éventuels entre lesdites pièces. L'utilisation d'une pièce monobloc simplifie également l'assemblage du moteur 13 et améliore la précision de guidage du rotor 51 par rapport au stator 23, notamment pour assurer un positionnement précis des aimants par rapport au stator.

L'arbre de rotor 51 est de forme globalement tubulaire. Avantageusement, plus précisément, l'arbre de rotor 51 comprend trois enceintes cylindriques 52A, 52B et 52C creuses qui se succèdent le long de l'axe A1, donnant sa forme tubulaire à l'arbre 51. L'arbre de rotor 51 forme ainsi un conduit interne 83, coaxial avec l'axe A1, s'étendant d'une extrémité à l'autre de l'arbre 51. Le conduit interne 83 est ici formé par les enceintes cylindriques 52A, 52B et 52C successives. L'enveloppe globale de l'arbre de rotor 51 s'étend préférentiellement à l'intérieur d'un cône virtuel, centré sur l'axe A1 et dont le sommet est dirigé vers l'arrière du moteur 13, le cône passant successivement par les billes du roulement 31A et du roulement 31B. L'arbre 51 étant tubulaire et creux, son inertie est minimisée du fait d'une enveloppe globale rapprochée de l'axe A1.

La partie cylindrique 53 entoure l'arbre de rotor 51, en étant coaxiale avec ce dernier et avec l'axe principal A1. La partie cylindrique 53 et l'arbre de rotor 51 sont fixement solidaires l'un de l'autre, de sorte que l'arbre de rotor 51 peut être entraîné en rotation autour de l'axe A1 par rapport au stator 23, par mise en rotation du rotor 29 via la partie cylindrique 53.

Comme bien visible sur la figure 9, le rotor 29 comprend de préférence un disque 61, par l'intermédiaire duquel la partie cylindrique 53 est solidaire de l'arbre principal A1. Le disque 61 est disposé entre les plans P1 et P2.

De préférence, le disque 61 est solidaire de la partie cylindrique 53 en formant une pièce d'un seul tenant avec la partie cylindrique 53. Sinon, le disque 61 peut être une pièce assemblée avec la partie cylindrique 53. De préférence, le disque est agencé entre les extrémités axiales de la partie cylindrique 53, de sorte que la partie cylindrique 53 et le disque ont une section longitudinale en forme de « T ».

De préférence, le disque 61 est solidaire avec l'arbre de rotor 51 en étant emmanché sur l'arbre de rotor et fixé en rotation autour de l'arbre de rotor 51. Pour cela, le disque 61 est avantageusement emmanché sur l'arbre de rotor 51 entre les plans P1 et P2, de sorte à être traversé par l'arbre de rotor 51, par l'intermédiaire d'un alésage central 63 du disque 61. L'arbre de rotor 51 comprend une paroi de centrage 67, qui est ici une paroi radiale externe, coopérant avec l'alésage 63 selon un liaison cylindre-cylindre. Avantageusement, l'arbre de rotor 51 comprend un collet 69, qui s'étend radialement à l'axe principal A1 et est agencé entre le premier plan P1 et le deuxième plan P2. Le disque 61 est fixé au collet 69, par exemple au moyen de plusieurs vis d'assemblage 70, par exemple dix vis d'assemblage 70, parallèles à l'axe principal A1 et réparties autour de cet axe, et de plusieurs goupilles élastiques 72, par exemple trois. La fixation du disque 61 au collet 69 fixe le disque 61 en rotation autour de l'arbre de rotor 51.

De préférence, le disque 61 comprend des évidements 65, par exemple dix évidements, répartis autour de l'axe principal A1. Radialement, les évidements 65 sont agencés entre la partie cylindrique 53 et l'arbre de rotor 51, notamment entre la partie cylindrique 53 et le collet 69. Chaque évidement 65 est une ouverture traversant le disque 61 de part en part parallèlement à l'axe A1.

Le recours au disque 61 pour solidariser la partie cylindrique 53 permet de minimiser l'inertie du rotor 29, notamment si le disque 61 est à équidistance, ou quasiment à équidistance, des plans P1 et P2. De préférence, afin que l'inertie de rotation soit minimale, un seul disque 61 est prévu pour relier la partie cylindrique 53 à l'arbre 51, la partie cylindrique 53 et l'arbre 51 n'étant pas reliés autrement que par l'unique disque 61. En variante, on peut prévoir plusieurs disques 61 pour relier la partie cylindrique 53 à l'arbre de rotor 51.

Les aimants permanents 57 sont agencés sur une paroi périphérique externe 55 de la partie cylindrique 53. La paroi périphérique externe 55 est avantageusement une surface radiale externe, centrée sur l'axe A1, qui s'étend préférentiellement d'une extrémité axiale à l'autre de la partie cylindrique 53, en regard des tôles de bobinage 33, sur toute la longueur des dents de bobinage 33.

Chaque aimant permanent 57 comprend une surface externe S57 respective, les surfaces externes S57 étant en regard des dents de bobinages 35 et s'inscrivant sur un cercle de rotor 60, centré sur l'axe principal A1, perpendiculaire à l'axe A1, et définissant un diamètre de rotor D29. Avantageusement, les aimants 57 ont une longueur, mesurée parallèlement à l'axe principal A1, de 30mm, une largeur, mesurée orthoradialement, de 10.5mm, et une épaisseur, mesurée radialement, de 3.5 mm.

On définit une longueur L53 de la partie cylindrique 53, qui est mesurée parallèlement à l'axe principal A1. La longueur L53 est mesurée sans dépasser les aimants permanents 57 dans le sens de l'axe A1, c'est-à-dire, dans le présent exemple, à partir d'une extrémité avant de l'un des aimants permanents 57 de l'ensemble disposé à l'avant du rotor 29, jusqu'à l'extrémité arrière de l'un des aimants permanents 57 de l'ensemble disposé à l'arrière du rotor 29.

Le rotor 29 est dimensionné de façon à ce qu'un rapport du diamètre externe de stator D23e par rapport à la longueur L53 de la partie cylindrique 53, est compris entre 2.0 et 4.0, de préférence compris entre 2.5 et 3.5, de préférence encore compris entre 2.8 et 3.2. Ce dimensionnement est optimal pour obtenir un fort couple tout en minimisant l'inertie. Autrement dit, ce dimensionnement est optimal pour garantir une densité énergétique élevée du moteur 13. On appelle constante de couple moteur Kt une valeur de couple obtenue par unité de courant I délivré par le circuit de puissance. La constante de couple Kt est ici calculée à un régime moteur de 750 tours par minute, ce qui correspond à une vitesse métier de 1500 coups par minute. Avantageusement, le moteur 13 développe une constante de couple Kt comprise entre 6.5 et 8 Nm/A, de préférence compris entre 7 et 7.5 N.m/A.. L'atteinte d'une telle valeur de constante de couple moteur Kt correspond à l'emploi d'un moteur à bon rendement.

De préférence, le diamètre externe de stator D23e est égal à 180mm et la longueur L53 est égale à 60mm. En variante, la longueur L53 est inférieure à 60mm, et le diamètre externe de stator D29e ajusté pour obtenir toujours le rapport ci-dessus.

Avantageusement, le rotor 29 comprend un premier ensemble 59A d'aimants permanents 57, comprenant douze à quarante aimants permanents 57, de préférence de trente à trente-cinq aimants permanents 57, de préférence trente aimants permanents 57, répartis équitablement autour de l'axe principal A1. Les aimants permanents 57 de ce premier ensemble 59A sont disposés les uns à la suite des autres autour de l'axe principal A1. De préférence, les aimants permanents 57 de ce premier ensemble 59A sont disposés suivant un même plan perpendiculaire à l'axe A1. Couplée aux dimensions du stator 23 précitées, ces dimensions sont optimales pour maximiser le couple tout en minimisant l'encombrement.

Avantageusement, le rotor 29 comprend un deuxième ensemble 59B d'aimants permanents 57, décalé par rapport au premier ensemble 59A suivant l'axe principal A1. De même que pour le premier ensemble 59A, les aimants 57 de ce deuxième ensemble 59B sont disposés les uns à la suite des autres autour de l'axe principal A1. De préférence, les aimants permanents 57 de ce deuxième ensemble 59B sont disposés suivant un même plan perpendiculaire à l'axe A1, axialement décalé par rapport au plan du premier ensemble 59A. Comme visible sur la figure 9, chaque aimant permanent 57 du deuxième ensemble 59B est adjacent à l'un des aimants permanents 57 du premier ensemble 59A, suivant l'axe principal A1. De plus, chaque aimant permanent 57 du premier ensemble 59A est angulairement décalé, autour de l'axe principal A1, par rapport à l'aimant permanent 57 du deuxième ensemble 59B qui lui est adjacent, par exemple d'un angle de 0.5 à 5 degrés, de préférence 1 à 2 degrés, de préférence encore 1 degré. Ainsi, pour une position donnée du rotor 29 autour de l'axe A1, deux aimants permanents 57 appartenant à deux ensembles 59A et 59B différents et adjacents l'un à l'autre ne sont pas en regard d'une même portion du stator 23. Ce décalage angulaire vise à réduire la survenance de mouvements intermittents saccadés du rotor 29, notamment au démarrage du moteur 13, phénomène parfois dénommé couple d'encochage, couple de détente ou encore couple de « cogging », et qui s'applique aux moteurs dont le rotor est à aimants permanents. Autrement dit, ce décalage angulaire vise et à fluidifier le fonctionnement du moteur 13 en réduisant les oscillations de couple. Cette construction est particulièrement avantageuse, puisque la présente application exige un fonctionnement à relativement faible vitesse et des démarrages répétés.

Avantageusement, le rotor 29 est de plus dimensionné de façon à ce qu'un moment d'inertie du rotor 29 soit inférieur à 100 kg.cm², de préférence inférieur à 90 kg.cm², de préférence inférieur à 80 kg.cm². Ce dimensionnement contribue à garantir un fort couple sans augmenter excessivement le diamètre du rotor dont l'inertie est habituellement pénalisante, lorsqu'elle est trop élevée, pour le fonctionnement dynamique de la chaine cinématique.

Lors du tissage, le rotor 29 tourne à une vitesse d'environ 750 tours.min-1 par rapport au stator.

Préférentiellement, le moteur électrique rotatif 13 a un couple nominal compris entre 30 et 100 Nm, de préférence compris 50 et 70 Nm, de préférence compris entre 60 et 70 Nm. Le moteur 13 dimensionné tel que décrit dans ce qui précède a un couple de 65 Nm, allant jusqu'à 93 Nm au pic d'accélération, une inertie de 78 kg.cm² et une puissance nominale de 5,2kW. La formule de puissance nominale étant le couple multiplié par la vitesse angulaire continue et uniforme du moteur : P = C w, ω = 2 pi n / 60 , avec la vitesse de rotation du moteur n exprimée en tr/min.

Le moteur 13 comporte avantageusement un capteur de position 91, par exemple du type résolveur, dont une mesure reflète l'orientation du rotor 29 autour de l'axe A1, par rapport au stator 23. De préférence, le capteur de position 91 est disposé à une extrémité arrière de l'arbre 51, Le capteur 91 inclut par exemple une partie fixe attachée au stator 23 via le flasque 27, et une partie mobile, attachée à l'extrémité arrière de l'arbre 51. Par exemple, le capteur 91 permet la mesure de 4096 position discrètes distinctes du rotor 29 autour de l'axe A1 par rapport au stator 23. Le microcontrôleur associé au moteur électrique rotatif 13 détermine et fournit le courant aux différents bobinages du stator 23 en fonction de la position du rotor 29 à partir des signaux provenant du capteur 91, et des consignes de position.

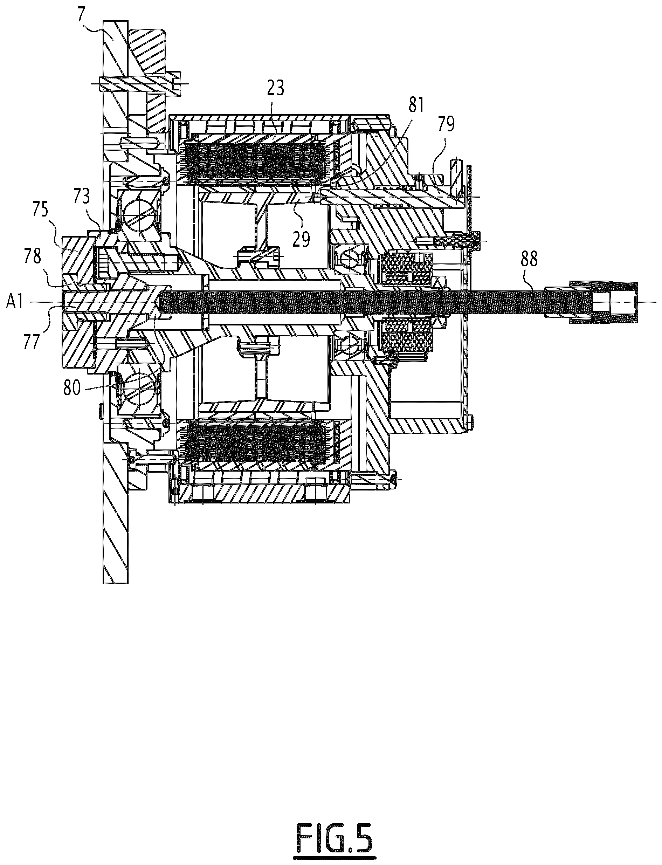

Avantageusement, le moteur électrique rotatif 13 comprend en outre des moyens de blocage, en l'occurrence une goupille de blocage 79 et au moins deux crans 81 et 82, permettant une configuration de blocage dans laquelle le rotor 29 est immobilisé par rapport au stator 23 autour de l'axe principal A1. La configuration de blocage est montrée sur la figure 5. La goupille de blocage 79 est mobile par rapport au stator 23 selon une direction parallèle à l'axe principal A1. Le premier cran 81, appartenant au rotor 29, coopère avec la goupille de blocage 79 de façon à immobiliser le rotor 29 dans une orientation de réglage d'amplitude de foule. Le deuxième cran 82, appartenant au rotor 29, coopère avec la goupille de blocage 79 de façon à immobiliser le rotor 29 dans une orientation de réglage de hauteur de foule. Ces orientations particulières interviennent lors du réglage de hauteur de foule et d'amplitude de foule, qui sera détaillé dans la suite de la description. On appelle configuration de libération la configuration dans laquelle les moyens de blocage autorisent la rotation du rotor 29 autour du stator 23. La configuration de libération est montrée sur la figure 3. C'est la configuration qui est utilisée lors du tissage. De préférence, les crans 81 et 82 sont formés à une extrémité axiale arrière de la partie cylindrique 53. De préférence, la goupille de blocage 79 est montée au travers du flasque arrière 27, de façon à pouvoir être actionnée depuis l'extérieur du moteur 13, à l'arrière du moteur 13, notamment manuellement.

Lorsque la goupille de blocage 79 coopère avec le cran 81 en configuration de blocage, le rotor 29 est immobilisé dans une première orientation par rapport au stator 23, dite « orientation de réglage d'amplitude de foule ». Lorsque la goupille de blocage 79 coopère avec le cran 82 en configuration de blocage, le rotor 29 est immobilisé dans une deuxième orientation par rapport au stator 23, dite « orientation de réglage de hauteur de foule ». De préférence, le cran 82 est disposé à 90 degrés par rapport au cran 81 autour de l'axe A1. L'orientation de réglage de hauteur de foule est donc à un angle de 90° par rapport à l'orientation de réglage d'amplitude de foule. En pratique, on prévoit avantageusement quatre crans, dont deux crans 81 diamétralement opposés et deux crans 82 diamétralement opposés, les crans 81 et 82 étant espacés de 90 degrés les uns des autres.

Le mouvement de rotation du rotor 29 ainsi produit par le moteur électrique rotatif 13 est ensuite converti en le mouvement de translation du cadre 3 au moyen d'un système bielle-manivelle-levier, incluant la manivelle 15, la bielle d'attaque 17 et le levier d'attaque 19.

Comme bien visible sur la figure 4, la manivelle 15 est directement solidaire de l'arbre de rotor 51, sans transmission ou réducteur intermédiaire. La manivelle 15 est disposée à l'avant du moteur 3. Le plan P1 sépare la manivelle 15 de la partie cylindrique 53.

La manivelle 15 comprend une base 73, une pièce de liaison 75 et un maneton 71.

La base 73 est solidaire de l'arbre de rotor 51, pour être entraînée en rotation par le rotor 29 autour de l'axe A1 par rapport au stator 23. La base 73 est par exemple fixée à l'arbre de rotor 51 au moyen de trois goupilles élastiques 85 et de trois vis d'assemblage 74, parallèles à l'axe principal A1 et réparties régulièrement autour de cet axe A1. Un nombre de goupilles 85 et de vis 74 différent peut être choisi. Dans le présent exemple, la base 73 forme un plateau radial et deux rails, formant un guide de coulissement pour la pièce de liaison 75.

La pièce de liaison 75 est montée sur la base 73. Dans ce mode de réalisation, la pièce de liaison 75 est une bride à coulisse axiale traversante qui est apte à coulisser par rapport à la base 73, suivant une direction radiale par rapport à l'axe A1. La pièce de liaison 75 est reçue entre les rails et est en appui contre le plateaude la base 73 pour être guidé en coulissement par la base 73.

Le maneton 71 définit un axe d'excentrique A2, parallèle à l'axe principal A1 et distant de l'axe principal A1 d'une distance d'entraxe d'excentrique R1. Le maneton 71 et la pièce de liaison 75 sont fixement solidaires l'un de l'autre.

Le coulissement de la pièce de liaison 75 et du maneton 71 par rapport à la base 73 permet de modifier la distance d'entraxe d'excentrique R1.

La pièce de liaison 75 appartient à un système de réglage de la machine de formation de la foule 3, permettant de modifier la distance d'entraxe d'excentrique R1. En effet, du fait de la structure de la machine de formation de la foule 9, l'amplitude de foule est directement liée à la distance d'entraxe d'excentrique R1. En l'espèce, plus la distance R1 est élevée, plus l'amplitude de la course C3 est élevée, c'est-à-dire plus la distance entre les positions B3 et H3 est grande. Modifier la distance d'entraxe d'excentrique R1 permet donc de modifier l'amplitude de l'ouverture de la foule commandée par le cadre 3. Par exemple, on prévoit que la distance R1 peut être variée d'une valeur minimale de 20 mm à une valeur maximale de 60 mm, pour faire varier l'amplitude de la course C3 d'une valeur minimale de 50 mm à une valeur maximale de 160 mm, lorsque la hauteur de la course C3 est centrée sur la position de référence P3, c'est-à-dire avec les positions B3 et H3 à équidistance de la position P3.

Le système de réglage comprend aussi une vis de réglage 77, visible sur la figure 3, apte à sélectivement autoriser le coulissement de la pièce de liaison 75 par rapport à la base 73 et à solidariser la base 73 avec la pièce de liaison 75. Lorsque le système de réglage est dans une configuration de réglage, la vis 77 est désserrée et le coulissement est autorisé. A l'inverse, lorsque le système de réglage est dans une configuration de verrouillage, la vis de réglage 77 est serrée et le coulissement est impossible. Ainsi, la distance d'entraxe d'excentrique R1 peut être réglée si et seulement si le système de réglage est en configuration de réglage, et est fixée si le système de réglage est en configuration de verrouillage. Durant le tissage, le système de réglage est en configuration de verrouillage.

Comme montré sur les figures 3 et 4, on prévoit avantageusement que la vis de réglage 77 est coaxiale avec l'axe A1. La vis de réglage 77 comporte un corps qui traverse un orifice oblong 76, appartenant à la pièce de liaison 75 et qui traverse la pièce de liaison 75. Dans l'orifice oblong 76, un écrou de serrage 78 est prévu, dans lequel la vis 77 est vissée. La vis 77 comporte en outre une tête 80, par l'intermédiaire de laquelle la vis 77 peut être mise en rotation, la base 73 et la pièce de liaison 75 sont axialement interposées entre l'écrou 78 et la tête 80, de sorte qu'un serrage de la vis 77 dans l'écrou 78 serre la pièce de laision 75 contre la base 73 pour interdire le coulissement. La tête 80 est préférentiellement agencée à l'intérieur du conduit interne 83 de l'arbre de rotor 51. Comme montré sur la figure 5, la tête 80 est ainsi accessible depuis l'arrière du moteur 3, pour être actionnée à l'aide d'un outil de réglage 88, par exemple un tournevis, introduit jusqu'à la tête 80 depuis l'arrière du moteur 3 via le conduit interne 83. La vis 77 est choisie courte, façon à être plus résistante aux efforts de torsion appliqués par l'outil de réglage 88, ainsi que pour minimiser l'inertie du rotor 29, notamment par rapport à une vis dont le corps s'étendrait sur toute la longueur de l'arbre de rotor 51. L'enveloppe de l'arbre 51 est rapprochée au plus proche de l'axe A1, tout en laissant un passage central juste suffisant pour introduire l'outil de réglage 88.

La bielle d'attaque 17 est, à une première extrémité, attelée au maneton 71, et pivotante autour de l'axe d'excentrique A2 par rapport au maneton 71, et donc par rapport à la manivelle 15. A une deuxième extrémité, la bielle 17 est attelée au levier d'attaque 19, en étant pivotante autour d'un axe de levier A4 par rapport au levier d'attaque 19. L'axe de levier A4 est parallèle à l'axe principal A1.

On note R2 une distance d'entraxe de bielle, définie comme la distance entre l'axe de levier A4 et l'axe d'excentrique A2. Avantageusement, la bielle d'attaque 17 comprend deux parties, télescopiques entre elles, de façon à pouvoir faire varier la distance d'entraxe de bielle R2. Le système de réglage précité inclut un moyen de réglage de la distance R2, permettant une configuration de réglage de la distance d'entraxe de bielle R2 et une configuration de verrouillage de la distance d'entraxe de bielle R2. Dans la configuration de réglage de hauteur de foule, un coulissement entre les deux parties de la bielle 17 est possible pour faire varier la distance d'entraxe de bielle R2. Cela a pour conséquence de décaler la course C3 suivant l'axe Z3 par rapport au sol, c'est-à-dire à régler la hauteur des positions H3, B3 et P3 suivant l'axe Z3. En configuration verrouillée, le coulissement entre les deux parties est verrouillé, de sorte que les deux parties sont solidaires entre elles et que la distance d'entraxe de bielle R2 est fixe, fixant ainsi la hauteur de la course C3 par rapport au sol suivant l'axe Z3.

Le levier d'attaque 19, visible sur les figures 1 et 2, est pivotant autour d'un axe de levier A3 par rapport au bâti 7. Le premier axe de levier A3 est fixe par rapport à, et parallèle à, l'axe principal A1. Ainsi, le pivotement du levier d'attaque 19 autour de l'axe A3 est assujetti par la bielle 17 au mouvement de rotation de la manivelle 15, et donc à la rotation rotor 29. A son extrémité non attelée à la bielle d'attaque 17, le levier d'attaque 19 est attelé à une extrémité inférieure du montant 33A du cadre de lisses 3 qu'il actionne, préférentiellement via une biellette.

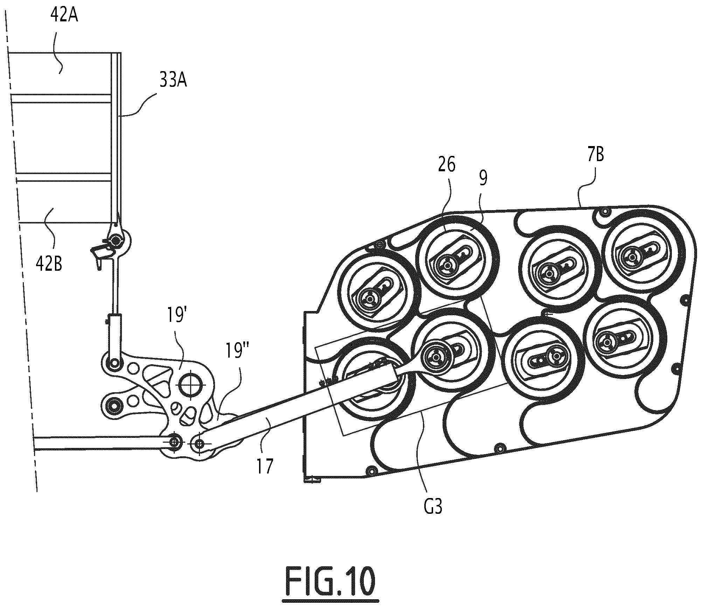

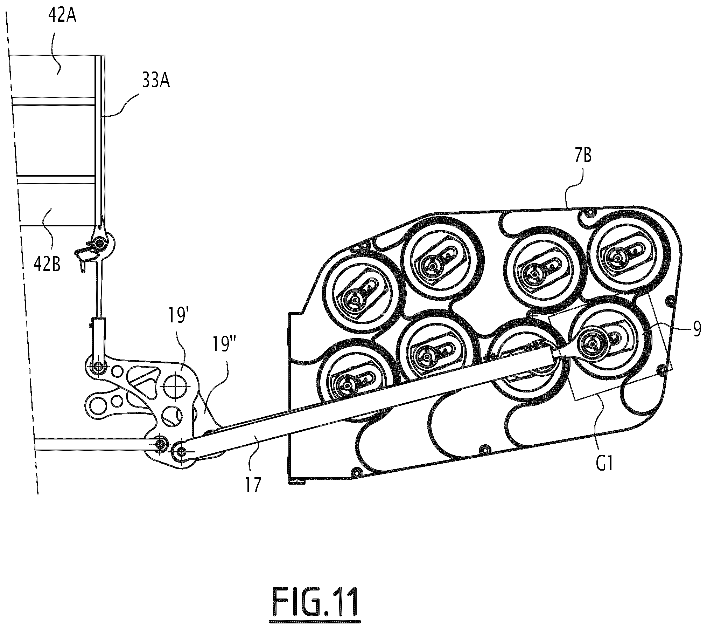

Par défaut, le système de blocage du moteur électrique rotatif 13 est en configuration de libération et le système de réglage est en configuration verrouillée. Lors du tissage, le microcontrôleur commande la mise sous tension du moteur électrique rotatif 13, dont l'arbre de rotor 51 décrit alors une course en rotation autour de l'axe principal A1. Par l'intermédiaire du système bielle-manivelle décrit ci-dessus, le mouvement est transmis au levier d'attaque 19 qui décrit alors une course d'oscillation autour du premier axe de levier A3, entraînant le cadre de lisses 3 suivant la course C3. La course d'oscillation du levier d'attaque 19 inclut une orientation de cadre haut, dans laquelle le cadre 3 est dans sa position haute H3, une orientation de croisement, dans laquelle le cadre 3 est dans sa position de référence P3, et une orientation de cadre bas, dans laquelle le cadre 3 est dans sa position basse B3. Le levier d'attaque dans son orientation de cadre haut 19' et le levier d'attaque dans son orientation de cadre bas 19" sont représentés sur les figures 10 à 14. On obtient ainsi le mouvement désiré pour le cadre de lisses à partir du moteur électrique rotatif 13 optimisé pour l'application en terme de couple et d'encombrement.

Le moyen d'indexage susmentionné, c'est-à-dire la goupille d'indexage 89, impose que la carcasse 21 et le système de blocage soient orientés, autour de l'axe A1 par rapport au bâti 7, de sorte que le levier d'attaque 19 soit dans l'orientation de cadre haut ou dans l'orientation de cadre bas lorsque le rotor 29 est dans l'orientation de réglage d'amplitude de foule en configuration de blocage, et que le levier d'attaque 19 soit dans l'orientation de croisement lorsque le rotor 29 est dans l'orientation de réglage de hauteur de foule en configuration de blocage.

Avantageusement, la machine de formation de la foule 3 est agencée de sorte que, lorsque le moteur 13 est en configuration de blocage avec le rotor 29 dans l'orientation de réglage d'amplitude de foule, alors l'axe principal A1, l'axe d'excentrique A2 et le deuxième axe de levier A4 sont sensiblement coplanaires. Cet agencement est également obtenu grâce au moyen d'indexage susmentionné. En d'autres termes, la bielle d'attaque 17 est sensiblement positionnée dans le prolongement d'une direction de coulissement de la pièce de liaison 75 par rapport à la base 73. Cette disposition particulière permet le réglage de la distance d'entraxe d'excentrique R1 par l'entraînement de la bielle d'attaque 17.

Par « *sensiblement coplanaire* » on autorise que les axes A1, A2 et A4 ne soient pas parfaitement coplanaires. Par rapport à une orientation parfaitement coplanaire entre un premier plan défini par les axes A1 et A2 et un deuxième plan défini par les axes A2 et A4, on autorise par exemple une tolérance de quelques degrés pour un angle que formerait le premier plan par rapport au deuxième plan.

Le premier axe de levier A3 et le deuxième axe de levier A4 sont reliés par une droite de bras de levier D34 perpendiculaire au deuxième axe de levier A4. L'axe d'excentrique A2 et le deuxième axe de levier A4 sont reliés par une droite de bielle D24 perpendiculaire au deuxième axe de levier A4. On appelle angle bielle-levier BL l'angle entre la droite de bras de bras de levier D34 et la droite de bielle D24. Avantageusement, l'angle bielle-levier α vaut 97 degrés, à plus ou moins 2 degrés, lorsque le levier d'attaque 19 est dans l'orientation de croisement. Ainsi, l'asymétrie de la course est minimisée, et les efforts dans la bielle optimisés.

L'ensemble de formation de la foule 5 précité comprend un à seize groupes de machines de formation de la foule 9, chaque groupe étant composé de plusieurs machines de formation de la foule 9, de préférence de deux à seize machines de formation de la foule 9.

Dans le présent exemple, on prévoit sur le bâti 7 un groupe G1 de quatre machines de formation de la foule 9 appartenant à la partie 7A et une machine de formation de la foule 9 appartenant à la partie 7B, un groupe G2 de trois machines de formation de la foule 9 appartenant à la partie 7A et une machine de formation de la foule 9 appartenant à la partie 7B, un groupe G3 de deux machines de formation de la foule 9 appartenant à la partie 7B, et cinq machines de formation de la foule 9 qui n'appartiennent à aucun groupe.

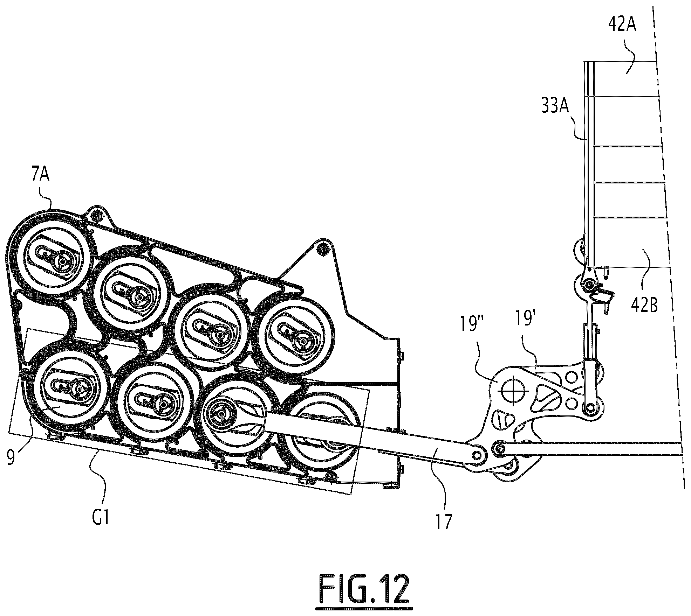

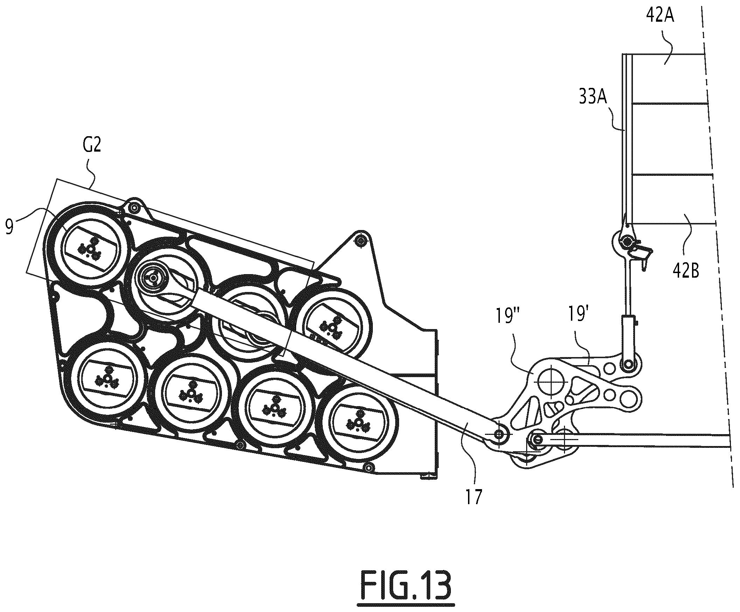

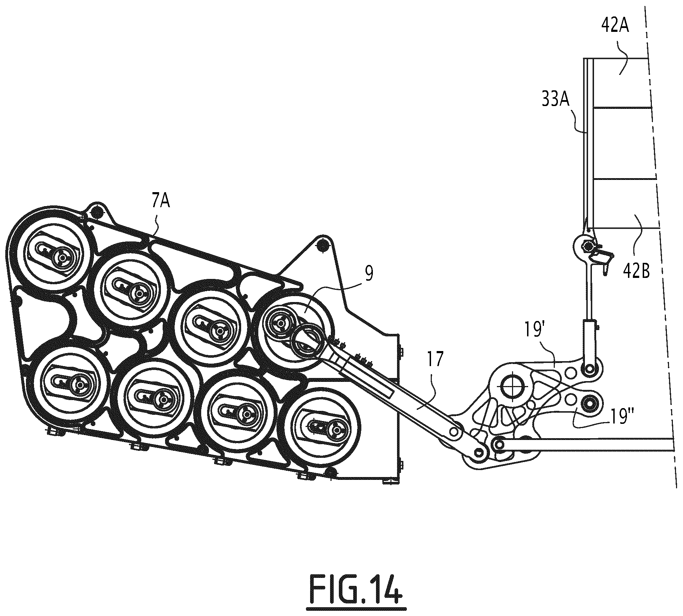

Le levier d'attaque 19 peut être de plusieurs types. Avantageusement, les machines de formation de la foule 9 d'un même groupe ont le même type de levier d'attaque 19. Des leviers d'attaque 19 du même type sont préférentiellement des leviers 19 identiques, ou ayant pour le moins des dimentions similaires. A titre d'exemple, les figures 1 et 12 montrent le levier 19 des machines de formation de la foule 9 du groupe G1, les figures 2 et 10 montrent le levier 19 des machines de formation de la foule 9 du groupe G3, la figure 13 montre le levier 19 d'une machine de formation de la foule 9 du groupe G2 et la figure 14 montre le levier d'attaque 19 d'une machine de formation de la foule n'appartenant à aucun groupe. On appelle distance de bras de levier d34 d'une machine de formation de la foule 9 la distance entre le premier axe de levier A3 et le deuxième axe de levier A4 de ladite machine de formation de la foule 9, mesurée le long de la doite de bras de levier D34. Pour chaque groupe, la distance de bras de levier d34 de chaque machine 9 du groupe est égale à la distance de bras de levier d34 de chaque autre machine 9 dudit groupe, ce en quoi ces leviers sont du même type. Au sein d'un groupe donné, lorsque les machines 9 du groupe sont en configuration de blocage avec le rotor 29 dans l'une des orientations de référence, alors les axes principaux A1, les axes d'excentriques A2 et les axes deuxièmes axes de levier A4 respectifs des machines de formation de la foule 9 dudit groupe sont avantageusement coplanaires. Ainsi, pour un type de levier d'attaque 19 donné, les rotors 29 de chacune des machines 9 d'un même groupe sont dans la même position angulaire lorsque les moteurs électriques rotatifs 13 sont en configuration de blocage.

Le fait de prévoir le moyen d'indexage, à savoir la goupille d'indexage 89, permet de facilement installer le moteur 13 sur le bâti 7, afin d'assurer que les axes A1, A2 et A4 soient coplanaires. En effet, le moyen d'indexage 89 assure que l'orientation de la carcasse 21 et donc du stator 23 est correcte, sachant que système de blocage est en partie monté sur le stator 23, à savoir la goupille de blocage 79. Le stator 23 et le système de blocage étant correctement orientés grâce au moyen d'indexage, le rotor 29 est lui-même correctement orienté lorsque la machine 3 est en configuration de blocage, afin d'assurer la coplanarité susmentionnée. Le moyen d'indexage permet aussi d'assurer que le rotor 29 et le stator 23 sont positionnés de façon optimale, concernant le développement de la puissance du moteur 13 durant le tissage, considérant que les accélérations et les décélérations du moteur 13 sont effectuées à des angles connus qui sont toujours les mêmes et correspondent par exemple aux positions extrémales B3 et H3 du cadre 3 actionné. Le moyen d'indexage permet aussi d'assurer que le capteur de position 91 est correctement positionné pour que la précision de la détection soit maximale pour ces angles particuliers.

Grâce à ces dispositions, le moteur est capable de s'arrêter très précisément à ces positions particulières, d'accélérer efficacement à partir des positions particulières, et la détection que ces positions particulières sont atteintes est très précise. On prévoit avantageusement que les aimants permanents 57 et les dents de bobinage 33 sont indexés par rapport à ces positions particulières, pour offrir une efficacité maximale.

Lors du réglage de hauteur de foule, on met le système de réglage en configuration de réglage en insérant la goupille de blocage 79 dans le deuxième cran 82. Ainsi, le rotor 29 est immobilisé dans son orientation de réglage de hauteur de foule. Grâce à l'indexage par la goupille d'indexage 89, cette orientation du rotor 29 correspond à la position de croisement du levier d'attaque 19, donc à la position de référence P3 du cadre de lisses 3. Puis, la bielle d'attaque 17 est mise en configuration de réglage de la distance d'entraxe de bielle R2. En déplaçant manuellement le cadre de lisses, on modifie alors la longueur de la bielle d'attaque 17, ce qui revient à modifier la hauteur de foule. Une fois le réglage effectué, la bielle d'attaque 17 est de nouveau mise en configuration de verrouillage de la distance d'entraxe de bielle R2. Enfin, le système de blocage est remis en configuration de libération en retirant la goupille de blocage 79 du deuxième cran 82, de sorte que le moteur électrique rotatif 13 puisse de nouveau tourner.

Lors du réglage de l'amplitude de foule, on met le système de réglage en configuration de réglage en insérant la goupille de blocage 79 dans le premier cran 81. Ainsi, le rotor 29 est immobilisé dans son orientation de réglage d'amplitude de foule. Grâce à l'indexage par la goupille d'indexage 89, cette orientation du rotor 29, située à 90 degrés par rapport à l'orientation de réglage de hauteur de foule, correspond à la position de cadre haut ou à la position de cadre bas du levier d'attaque 19, donc à la position haute H3 ou à la position basse B3 du cadre de lisses 3. Puis, on met le système de réglage en position de réglage en dévissant la vis de réglage 77 à l'aide de l'outil de réglage 88. En déplaçant manuellement le cadre de lisses 3 ou à l'aide d'un actionneur dédié, non représenté, on fait alors coulisser la pièce de liaison 75 par rapport à la base 73, ce qui revient à modifier la distance d'excentrique R1, et donc l'amplitude de foule. Une fois le réglage effectué, le système de réglage est remis en position verrouillée en revissant la vis de réglage 77 à l'aide de l'outil de réglage 88. Enfin, le système de blocage est remis en configuration de libération en retirant la goupille de blocage 79 du premier cran 81, de sorte que le moteur électrique rotatif 13 puisse de nouveau tourner.

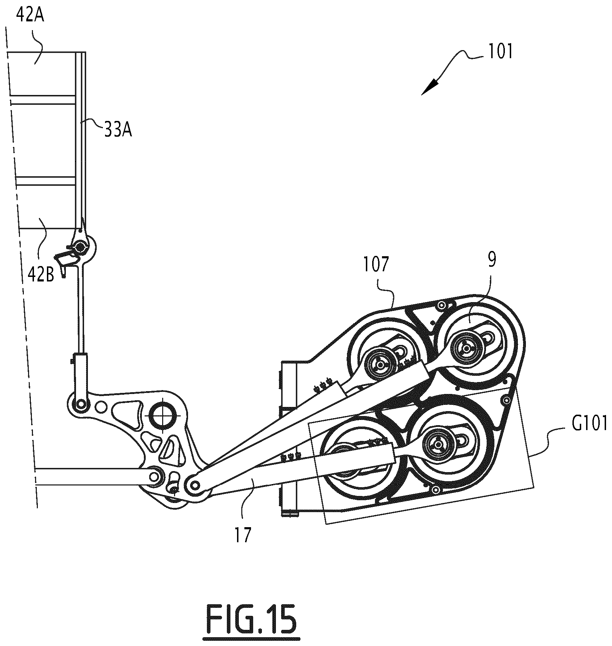

La figure 15 concerne un métier à tisser 101 selon un second mode de réalisation de l'invention. Ce métier à tisser 101 est identique au métier à tisser 1 des figures 1 à 14 sauf pour les différences mentionnées ci-après. Les caractéristiques du métier à tisser 101 qui sont identiques ou qui fonctionnent de la même façon que celles du métier à tisser 1 portent le même signe de référence. Les caractéristiques modifiées portent un signe de référence augmenté de 100. Le métier à tisser 101 diffère du métier 1 en ce qu'il comporte seulement quatre machines de formation de la foule 9 au lieu de seize. Le métier à tisser 101 comprend un bâti 107, qui remplace le bâti 7, comprenant seulement quatre emplacements 11 recevant respectivement les quatre machines 9.

On prévoit ici un groupe G101 de deux machines de formation de la foule 9 et deux autres machines de formation de la foule 9 qui n'appartienent à aucun groupe.

En variante, on prévoit que le métier à tisser comprend de deux à trente machines de formation de la foule.

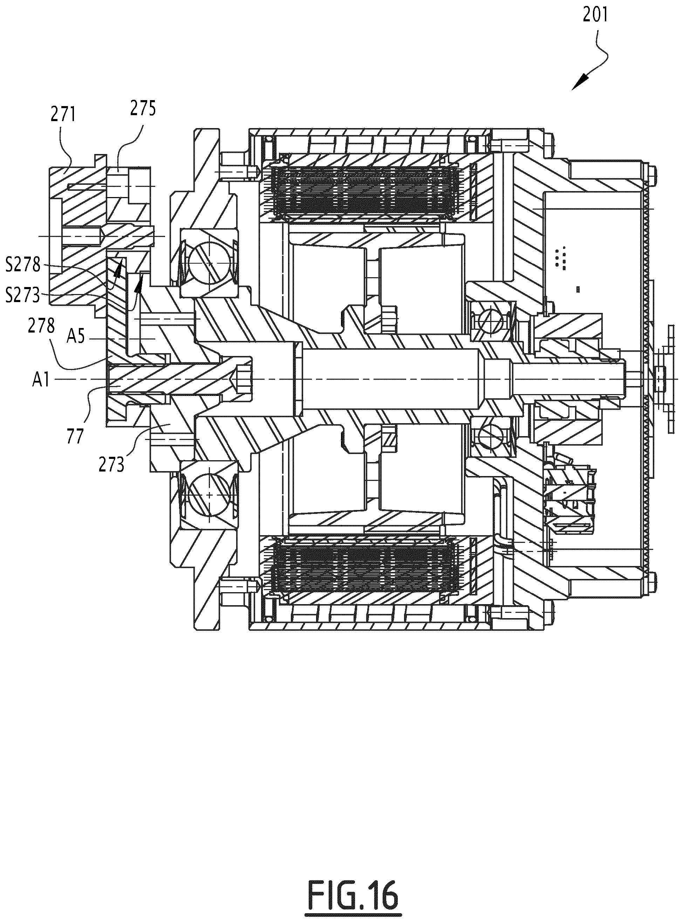

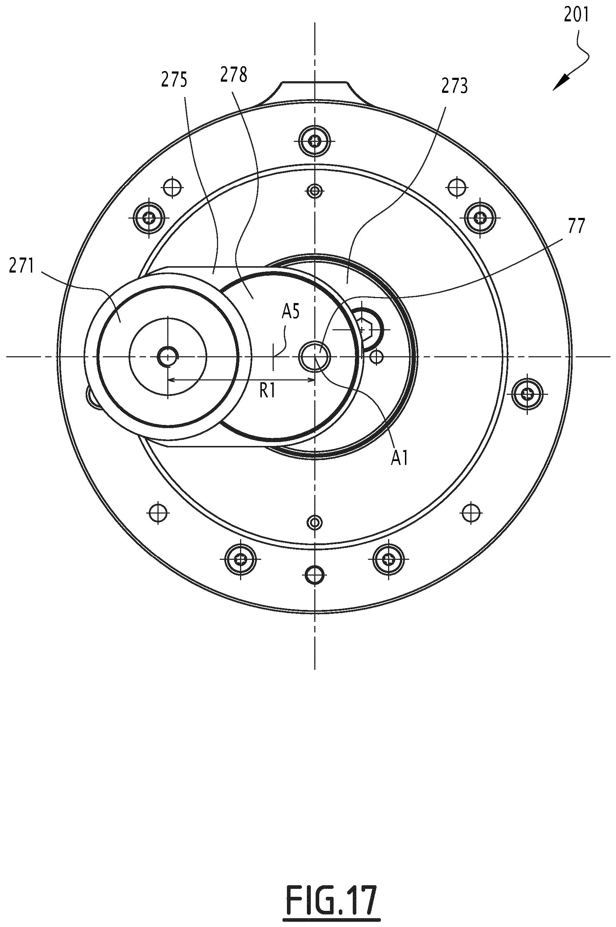

Les figures 16 à 18 concernent un métier à tisser 201 selon un troisième mode de réalisation de l'invention. Ce métier à tisser 201 est identique au métier à tisser 1 des figures 1 à 14 sauf pour les différences mentionnées ci-après. Les caractéristiques du métier à tisser 201 qui sont identiques ou qui fonctionnent de la même façon que celles du métier à tisser 1 portent le même signe de référence. Les caractéristiques modifiées portent un signe de référence augmenté de 200. Le métier à tisser 201 diffère du métier à tisser 1 du premier mode de réalisation en ce que la pièce de liaison 275 n'est plus coulissante par rapport à la base 273, mais que ces deux pièces sont pivotantes l'une par rapport à l'autre autour d'un axe de manivelle A5, parallèle à l'axe principal A1.

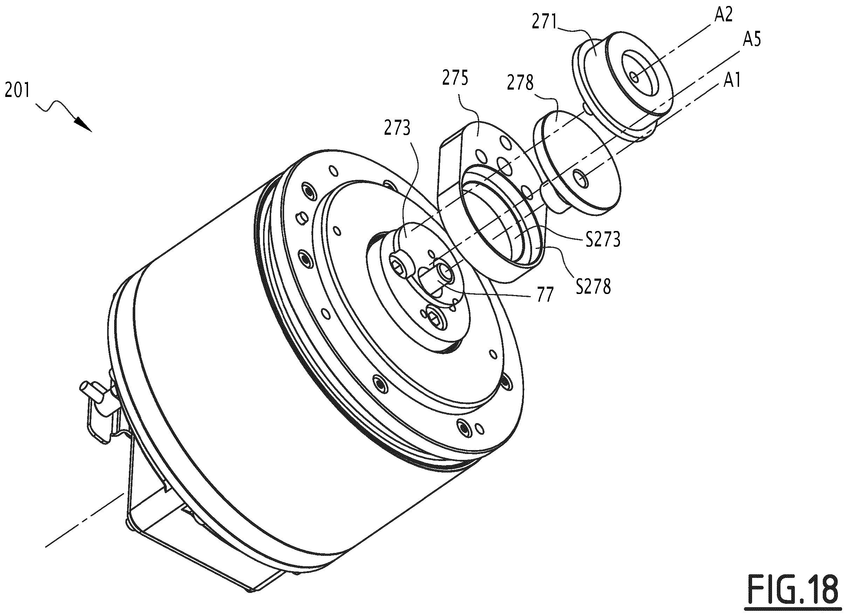

Comme bien visible sur la figure 18, la pièce de liaison 275 comprend un trou traversant définissant une première surface interne de forme circulaire S273, centrée sur l'axe de manivelle A5, complémentaire de la base 273, et une deuxième surface interne S278, centrée sur l'axe de manivelle A5 et complémentaire de l'écrou de serrage 278. La première surface interne S273 et la deuxième surface interne S278 forment une liaison pivot entre, d'une part, la pièce de liaison 275, et d'autre part, la base 273 et l'écrou de serrage 278 qui sont fixes l'un par rapport à l'autre autour de l'axe A5.

Le maneton 271, en étant fixé sur sur la pièce de liaison 275 en étant excentré par rapport à l'axe A1, définit une distance d'entraxe d'excentrique R1 variable suivant la position angulaire de la pièce de liaison 275 par rapport à la base 273.

La rotation de la pièce de liaison 275 par rapport à la base 273 est autorisée lorsque le système de réglage est en configuration de réglage, c'est-à-dire que l'écrou 278 est desserré par desserrage de la vis 77, de sorte que la distance d'entraxe d'excentrique R1 puisse être modifiée. La rotation de la pièce de liaison 273 par rapport à la base 275 est bloquée lorsque le système de réglage est en configuration verrouillée, par serrage de l'écrou 278 à l'aide de la vis 77, de sorte que la distance d'entraxe d'excentrique R1 est fixée.

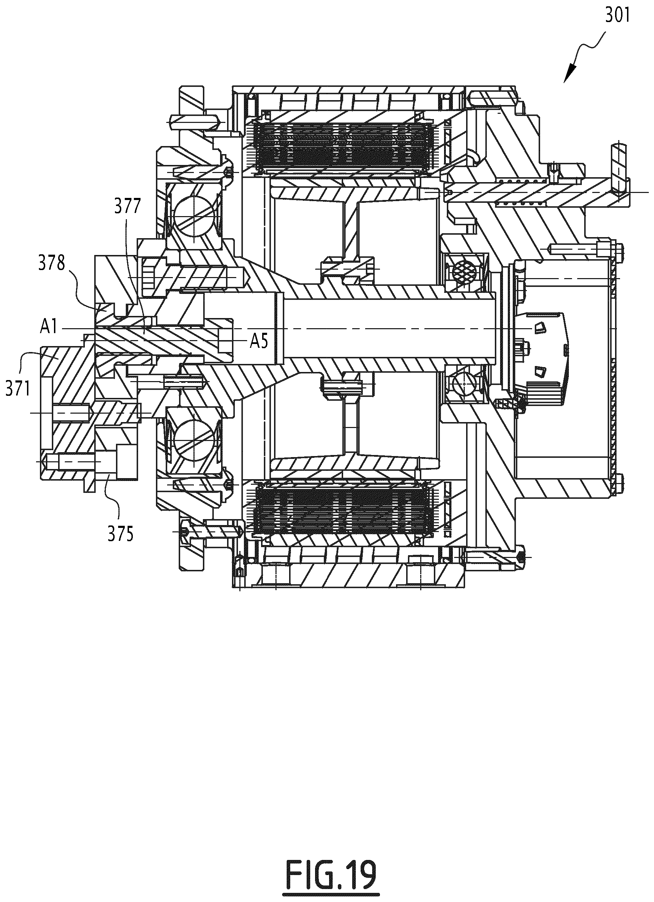

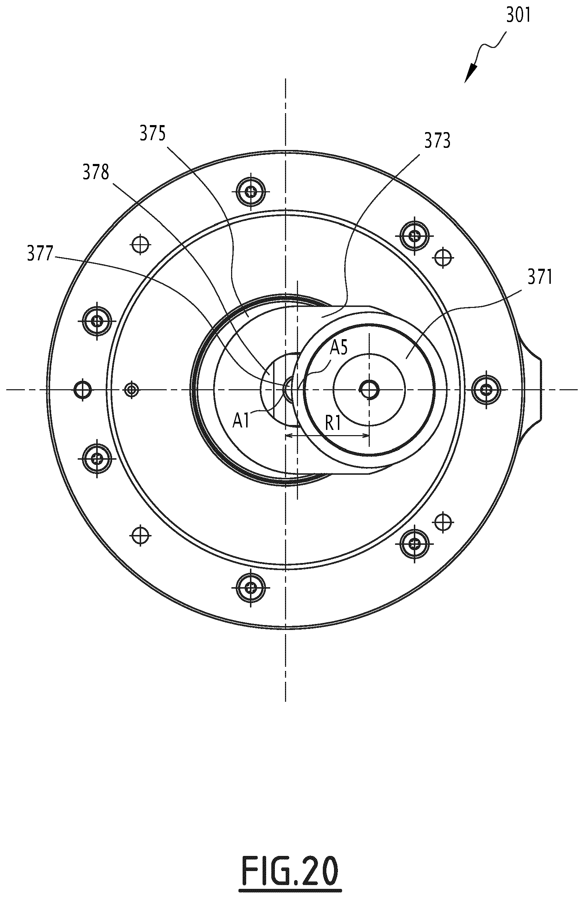

Les figures 19 et 20 concernent un métier à tisser 301 suivant un quatrième mode de réalisation de l'invention. Ce métier à tisser 301 est identique au métier à tisser 201 des figures 16 à 18 sauf pour les différences mentionnées ci-après. Les caractéristiques du métier à tisser 301 qui sont identiques ou qui fonctionnent de la même façon que celles du métier à tisser 201 portent le même signe de référence. Les caractéristiques modifiées portent un signe de référence augmenté de 100. Le métier à tisser 309 diffère du métier à tisser 209 du troisième mode de réalisation en ce que la vis de serrage 377 est excentrée par rapport à l'axe A1, en étant centrée sur l'axe A5. La machine 209 diffère aussi de la machine 309 par la forme de l'écrou de serrage 378, qui est de section circulaire et centré sur l'axe A5. En conséquence, la vis de serrage 377 est coaxiale avec la deuxième surface interne S278.

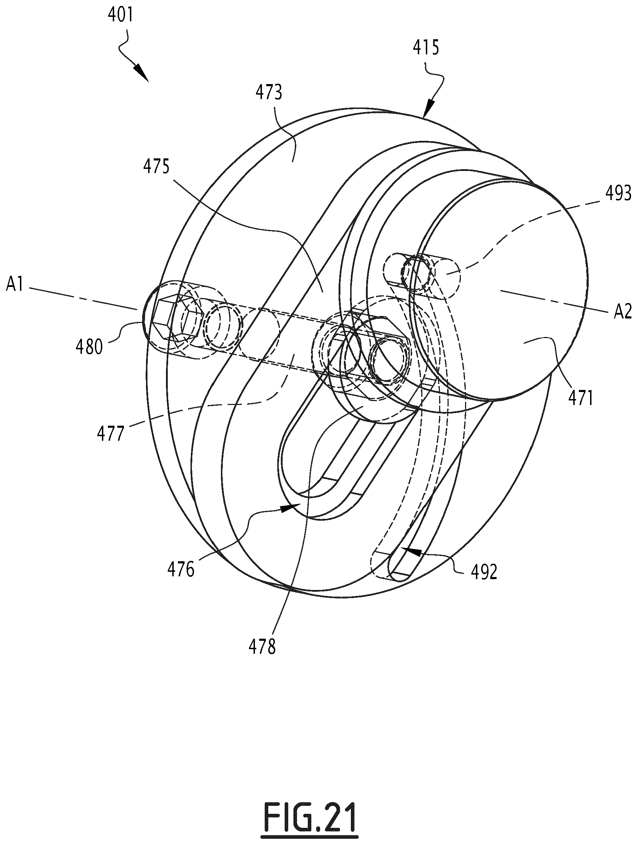

La figure 21 concerne un métier à tisser 401 selon un cinquième mode de réalisation de l'invention. Ce métier à tisser 401 est identique au métier à tisser 1 des figures 1 à 14 sauf pour les différences mentionnées ci-après. Les caractéristiques du métier à tisser 401 qui sont identiques ou qui fonctionnent de la même façon que celles du métier à tisser 1 portent le même signe de référence. Les caractéristiques modifiées portent un signe de référence augmenté de 400.

A la place de la manivelle 15, le métier à tisser 401 comprend une manivelle 415, assurant la même fonction. La manivelle 415 comprend une base 473, une pièce de liaison 475 et un maneton 471.

La base 473 est solidaire de l'arbre de rotor 51, pour être entraînée en rotation par le rotor 29 autour de l'axe A1 par rapport au stator 23. Dans le présent exemple, la base 473 forme un plateau radial, dépourvu des rails prévus pour la base 73.

La pièce de liaison 475 est montée sur la base 473. Dans ce mode de réalisation, la pièce de liaison 475 est une bride à coulisse axiale traversante qui est apte à coulisser par rapport à la base 473, radialement par rapport à l'axe A1. La pièce de liaison 475 est en appui coulissant contre le plateau de la base 473. Contrairement à la pièce de liaison 75, la pièce de liaison 475 peut pivoter autour de l'axe A1 par rapport à la base 475, puisque la pièce de liaison 475 n'est pas contrainte par des rails comme l'est la pièce de liaison 75.

Le maneton 471 et la pièce de liaison 475 sont fixement solidaires l'un de l'autre. Comme le maneton 71, le maneton 471 définit l'axe d'excentrique A2, parallèle à l'axe principal A1 et distant de l'axe principal A1 de la distance d'entraxe d'excentrique R1. Comme pour le maneton 71, l'axe A1 du maneton 471 est fixe par rapport à la pièce de liaison 471.

La manivelle 415 est configurée pour que le pivotement de la pièce de liaison 475 autour de l'axe A1 par rapport à la base 473 soit assujetti au coulissement de la pièce de liaison 475 radialement par rapport à la base 473. Pour cela, à la différence de la base 73, la base 473 comprend avantageusement une rainure came 492 et la pièce de liaison 475 comprend avantageusement un doigt suiveur 493, qui coopère avec la rainure came 492 en circulant le long de la rainure came 492, contraignant ainsi à ce que la translation radiale de la pièce de liaison 475 soit accompagnée d'une rotation de la pièce de radiale. A cette fin, la rainure came 492 suit une trajectoire en spirale autour de l'axe principal A1.

En pratique, la rainure came 492 est préférentiellement constituée par un sillon de forme spirale, ménagé en creux en surface de la base 473. Le doigt suiveur 493 est quant à lui préférentiellement centré sur l'axe d'excentrique A2.

La circulation du doigt suiveur 493 dans la rainure came 492 guide la pièce de liaison 475 selon un déplacement par rapport à la base 473, qui inclut notamment une translation radiale par rapport à la base 473, permettant de modifier la distance d'entraxe d'excentrique R1.

La pièce de liaison 475 appartient donc à un système de réglage permettant de modifier la distance d'entraxe d'excentrique R1, et, en conséquence, l'amplitude de foule, de façon similaire à ce qui est exposé ci-avant pour le métier à tisser 1.

Le système de réglage du métier à tisser 401 comprend, comme pour le métier à tisser 1, une vis de réglage 477, visible sur la figure 21, apte à sélectivement autoriser le déplacement de la pièce de liaison 475 par rapport à la base 473 et à solidariser la base 473 avec la pièce de liaison 475. Lorsque le système de réglage est dans une configuration de réglage, la vis 477 est désserrée et le déplacement est autorisé. A l'inverse, lorsque le système de réglage est dans une configuration de verrouillage, la vis de réglage 477 est serrée et le déplacement est impossible. Ainsi, la distance d'entraxe d'excentrique R1 peut être réglée si et seulement si le système de réglage est en configuration de réglage, et est fixée si le système de réglage est en configuration de verrouillage. Durant le tissage, le système de réglage est en configuration de verrouillage.

Comme montré sur la figures 21, on prévoit avantageusement la vis de réglage 477 est coaxiale avec l'axe A1 et comporte un corps qui traverse un orifice oblong 476 qui traverse la pièce de liaison 475. Dans l'orifice oblong 476, un écrou de serrage 478 est prévu, dans lequel la vis 477 est vissée. La vis 477 comporte en outre une tête 480, par l'intermédiaire de laquelle la vis 477 peut être mise en rotation. La base 473 et la pièce de liaison 475 sont axialement interposées entre l'écrou 478 et la tête 480, de sorte qu'un serrage de la vis 477 dans l'écrou 478 serre la pièce de liaison 475 contre la base 473 pour interdire le déplacement de la pièce de liaison 475. La tête 480 est préférentiellement accessible depuis l'arrière du moteur 3 pour pouvoir être actionnée.

Pour ce mode de réalisation, l'écrou 478 guide le pivotement de la pièce de liaison 475 autour de l'axe A1. La pièce de liaison 475 est donc guidée dans son déplacement à la fois par l'écrou, autour de l'axe A1 fixe par rapport à la base 473, et à la fois par le doig-suiveur 493, autour de l'axe A2 fixe par rapport à la pièce de liaison 475.

Dans ce qui suit, l'invention est expliquée en référence à un exemple expérimental, nullement limitatif.

L'expérience consiste à évaluer des exemples de moteur électrique rotatif conforme à l'invention, à savoir les moteurs B et C, par rapport à un moteur électrique comparatif A.

Le moteur A comparatif est un moteur du commerce, dont la structure est décrite dans EP1953276A1 et qui présente les caractéristiques indiquées dans le tableau 1 ci-dessous. Les caractéristiques du moteur A ont été soit constatées directement sur le moteur A (les diamètres longueurs ont été mesurées), soit fournies par le fabricant (couple nominal). Le moment d'inertie a été estimé par modélisation numérique du rotor à l'aide d'un logiciel de conception assistée par ordinateur.

Le moteur B selon l'invention est un moteur expérimental qui n'a pas été fabriqué, mais seulement modélisé numériquement. Le moteur B présente une structure conforme à celle du moteur 9 du premier mode de réalisation des figures 1 à 15 décrites ci-avant. Le moteur B présente les caractéristiques indiquées dans le tableau 1 ci-dessous. Les caractéristiques ont toutes été obtenues par modélisation numérique (dimensions, moment d'inertie) ou estimées par le calcul (couple nominal).

Le moteur C selon l'invention est un moteur expérimental qui a été testé sur banc d'essai. Le moteur C présente une structure conforme à celle du moteur 9 du premier mode de réalisation des figures 1 à 15 décrites ci-avant. Le moteur C présente les caractéristiques indiquées dans le tableau 1 ci-dessous

Dans le tableau ci-dessous, le rapport R correspond au rapport entre le diamètre externe de stator et la longueur de la partie cylindrique du rotor. Le rapport Kt correspond à la constante de couple moteur, exprimé comme une valeur de couple obtenue par unité de courant I délivré par le circuit de puissance. La constante de couple est calculée à un régime moteur comparable entre les différents moteurs expérimentés, ici à 750 tours par minute, ce qui correspond à une vitesse métier de 1500 coups par minute.

**[Tableau 1]**

| | Moteur A | Moteur B | Moteur C |
|---|---|---|---|
| Entraînement de la manivelle | Avec réducteur | Sans réducteur | Sans réducteur |
| Présence d'un arbre de rotor entouré par une partie cylindrique de rotor portant les aimants permanents | NON | OUI | OUI |
| Moment d'inertie du rotor hors manivelle et, si un réducteur est présent, hors réducteur (kg.cm²) | 45 | 95 | 78 |
| Diamètre externe de stator | 128 | 200 | 180 |
| Longueur de la partie cylindrique | 165 | 50 | 60 |
| Rapport R | 0.8 | 4 | 3 |
| Diamètre de rotor | 80 | 156 | 117 |
| Couple nominal, au rotor (N.m) | 60 | 65 | 65 |
| Rapport Kt (N.m/A) à 750tr.min-1 | 3 | 6 | 7 |
| Nombre d'ensembles d'aimants | 2 | 2 | 2 |
| Nombre d'aimants permanents par ensemble | 12 | 40 | 30 |
| Nombre encoches | 15 | 48 | 36 |

Le moteur C développe un rapport Kt = C / I = 65 N.M / 9,2 A = 7 Nm/A alors que les moteurs A et B développent de façon connue un rapport Kt de respectivement 3 Nm/A et 6 Nm/A à un régime de 750 tours par minute. L'atteinte d'une telle valeur de constante de couple moteur correspond à l'emploi d'un moteur à bon rendement.

Le moteur A présente des proportions axialement allongées, avec un diamètre externe de stator faible une longueur de la partie cylindrique particulièrement élevée. Le moteur A est donc particulièrement encombrant dans le sens de la longueur. On constate que le moteur A présente en soi un moment d'inertie particulièrement bas. Toutefois, le couple nominal au rotor est faible compte-tenu de l'application, de sorte qu'il est nécessaire de prévoir le réducteur. La faiblesse du diamètre limite la capacité du moteur à fournir un couple élevé à un courant faible. La présence du réducteur pour le moteur A augmente le moment d'inertie de manière importante, réduit le rendement mécanique et augmente l'encombrement dans le sens de la longueur, déjà élevé à cause du moteur lui-même.

Le moteur B est relativement court et radialement plus encombrant, avec un diamètre externe de stator élevé une longueur de la partie cylindrique relativement faible. Le moteur B est radialement encombrant, ce qui impose des contraintes sur la conception de l'ensemble de formation de la foule, pour disposer plusieurs moteurs côte-à-côte. Le fait de prévoir un diamètre externe de stator et un diamètre externe de rotor élevés permet de prévoir un nombre d'aimants permanents élevés autour de la partie cylindrique et un nombre d'encoches élevées pour le stator, avec un nombre de bobinages élevé. Le moteur B fournit ainsi un couple nominal suffisant pour l'application, il n'est donc pas nécessaire de prévoir un réducteur. Grâce à la présence de l'arbre de rotor entouré par la partie cylindrique, on constate que le moteur B présente en soi un moment d'inertie moyennement élevé, en dépit de son fort diamètre de rotor. Le moment d'inertie du moteur B convient pour l'application, surtout dans la mesure où il n'est pas nécessaire de prévoir un réducteur.

Le moteur C est de proportions équilibrées, ce qui facilite la conception de l'ensemble de formation de la foule, qui n'est pas trop encombrant, et qui permet de disposer facilement plusieurs moteurs côte-à-côte. Le fait de prévoir un diamètre externe de stator et un diamètre externe de rotor relativement élevés permet de prévoir un nombre d'aimants permanents relativement élevés autour de la partie cylindrique et un nombre d'encoches relativement élevées pour le stator, avec un nombre de bobinages relativement élevé. Le moteur B fournit ainsi un couple nominal suffisant pour l'application, il n'est donc pas nécessaire de prévoir un réducteur. De manière surprenante, le moment d'inertie est particulièrement faible, ce qui est très avantageux pour l'application, d'autant qu'aucun réducteur n'est nécessaire.

## Revendications

1. Machine de formation de la foule (9), pour actionner un cadre de lisses (3) d'un métier à tisser (1 ; 101 ; 201 ; 301 ; 401) selon une course (C3) en translation alternative suivant un axe de cadre, la machine de formation de la foule (9) comprenant :
- un moteur électrique rotatif (13), comprenant :
• une carcasse (21), centrée sur un axe principal (A1) du moteur électrique rotatif et configurée pour être solidaire d'un bâti machine (7) du métier à tisser (1 ; 101 ; 201 ; 301 ; 401),
• un stator (23), solidaire de la carcasse (21),
• un rotor (29), disposé dans le stator (23) et comprenant une partie cylindrique (53), centrée sur l'axe principal (A1) et comprenant une paroi périphérique externe (55),
• un premier roulement (31A), disposé dans un premier plan (P1), perpendiculaire à l'axe principal (A1), d'un côté avant du moteur électrique rotatif (13), et
• un deuxième roulement (31B), disposé dans un deuxième plan (P2), perpendiculaire à l'axe principal (A1), d'un côté arrière du moteur électrique rotatif (13), le premier roulement (31A) et le deuxième roulement (31B) guidant une rotation du rotor (29) par rapport au stator (23) autour de l'axe principal (A1);
- une manivelle (15 ; 415), solidaire du rotor (29) et comprenant un maneton (71 ; 271 ; 371 ; 471) définissant un axe d'excentrique (A2), parallèle à l'axe principal (A1) et distant de l'axe principal (A1) d'une distance d'entraxe d'excentrique (R1) ;
- un levier d'attaque (19), qui est configuré pour être pivotant autour d'un premier axe de levier (A3) par rapport au bâti machine (7), pour actionner le cadre de lisses (3), le premier axe de levier (A3) étant fixe par rapport à, et parallèle à, l'axe principal (A1); et
- une bielle d'attaque (17), qui comprend :
• une première extrémité, attelée au maneton (71 ; 271 ; 371 ; 471) en étant pivotante autour de l'axe d'excentrique (A2) par rapport au maneton (71 ; 271 ; 371 ; 471), et
• une deuxième extrémité, attelée au levier d'attaque (19) en étant pivotante autour d'un deuxième axe de levier (A4) par rapport au levier d'attaque (19), le deuxième axe de levier (A4) étant parallèle au premier axe de levier (A3) ;
**caractérisé en ce que** :
- le stator (23) comprend :
• des tôles de bobinage (33), entourant l'axe principal (A1) et s'étendant radialement entre un diamètre externe de stator (D23e) et un diamètre interne de stator (D23i) centrés sur l'axe principal (A1), les tôles de bobinage (33) formant des dents de bobinage (35) distribuées autour de l'axe principal (A1), dirigées vers l'axe principal (A1) et délimitant entre elles des encoches de stator (37), qui s'étendent parallèlement à l'axe principal (A1), et
• des bobinages électriques (39), chaque bobinage électrique (39) étant enroulé autour de plusieurs des dents de bobinage (35) en étant reçu dans les encoches de stator (37) ; et
- le rotor (29) comprend :
• un arbre de rotor (51), centré sur l'axe principal (A1), entouré par la partie cylindrique (53) du rotor (29) et étant solidaire de la partie cylindrique (53) du rotor (29) et de la manivelle (15 ; 415), et
• des aimants permanents (57), agencés sur la paroi périphérique externe (55) de la partie cylindrique (53) et étant répartis autour de l'axe principal (A1), chaque aimant permanent (57) comprenant une surface externe (S57) respective, les surfaces externes (S57) étant en regard des dents de bobinages (35) et s'inscrivant sur un cercle de rotor (60), centré sur l'axe principal (A1) et définissant un diamètre de rotor (D29) ; et
- un rapport du diamètre externe de stator (D23e) par rapport à une longueur (L53) de la partie cylindrique (53), mesurée parallèlement à l'axe principal (A1) sans dépasser les aimants permanents (57), est compris entre 2.0 et 4.0, de préférence compris entre 2.5 et 3.5 , de préférence encore compris entre 2.8 et 3.2.

2. Machine de formation de la foule (9) selon la revendication 1, dans laquelle :
- le rotor (29) comprend un premier ensemble d'aimants permanents (59A), comprenant 12 à 40 aimants permanents (57), de préférence de 30 à 35 aimants permanents (57), de préférence 30 aimants permanents (57), répartis équitablement autour de l'axe principal (A1) ; et
- le stator (23) comprend 24 à 48 encoches (37), de préférence 32 à 40 encoches (37), de préférence encore 36 encoches (37), réparties équitablement autour de l'axe principal (A1).

3. Machine de formation de la foule (1) selon la revendication 2, dans laquelle :
- le rotor (29) comprend un deuxième ensemble d'aimants permanents (59B), décalé par rapport au premier ensemble d'aimants permanents (59A) suivant l'axe principal (A1), chaque aimant permanent (57) du deuxième ensemble d'aimants permanents (59B) étant adjacent à l'un des aimants permanents (57) du premier ensemble d'aimants permanents (59A), suivant l'axe principal (A1); et
- chaque aimant permanent (57) du premier ensemble d'aimants permanents (59A) est angulairement décalé, autour de l'axe principal (A1), par rapport à l'aimant permanent (57) du deuxième ensemble d'aimants permanents (59B) qui lui est adjacent, d'un angle de 0.5 à 5 degrés, de préférence 1 à 2 degrés, de préférence encore 1 degré.

4. Machine de formation de la foule (9) selon l'une quelconque des revendications précédentes, dans laquelle le diamètre externe de stator (D23e) mesure entre 160 et 200 mm, de préférence entre 170 et 190 mm, de préférence encore entre 175 et 185 mm.

5. Machine de formation de la foule (9) selon l'une quelconque des revendications précédentes, dans laquelle le rotor (29) est conçu pour qu'un moment d'inertie du rotor (29) soit inférieur à 100 kg.cm², de préférence inférieur à 90 kg.cm², de préférence inférieur à 80 kg.cm².

6. Machine de formation de la foule (9) selon l'une quelconque des revendications précédentes, dans laquelle la machine de formation de la foule (9) comprend une armoire électrique, comprenant un circuit électrique de puissance configuré pour alimenter électriquement le moteur électrique rotatif (13) et en ce que le moteur électrique rotatif (13) développe un couple nominal compris entre 30 et 100 Nm, de préférence compris 50 et 70 Nm, de préférence compris entre 60 et 70 Nm.

7. Machine de formation de la foule (9) selon la revendication 6, dans laquelle le circuit électrique de puissance délivre un courant d'alimentation d'intensité I au moteur électrique rotatif (13) qui développe un couple rapporté par unité de courant I compris entre 6.5 et 8 Nm/A, de préférence compris entre 7 et 7.5 N.m/A, lorsque la vitesse de rotation du rotor (29) est maintenue à 750 tours par minute.

8. Machine de formation de la foule (9) selon l'une quelconque des revendications précédentes, dans laquelle :
- chaque dent de bobinage (35) comprend :
• une tête de dent (41), délimitée par le diamètre interne de stator (D23i),
• un pied de dent (43), délimité par le diamètre externe de stator (D23e), et
• un corps de dent (45), qui s'étend perpendiculairement à l'axe principal (A1), qui relie la tête de dent (41) au pied de dent (43) et qui présente une forme générale rectangulaire en projection dans le premier plan (P1), chaque corps de dent (45) ayant une longueur (L45), mesurée radialement par rapport à l'axe principal (A1), comprise entre 19 et 25 mm, de préférence entre 20 et 23mm, de préférence entre 21 et 23 mm ; et
- chaque bobinage électrique (39) forme trois couches de fil autour de la dent de bobinage (35) autour de laquelle ledit bobinage électrique (39) est enroulé.

9. Machine de formation de la foule (9) selon l'une quelconque des revendications précédentes, dans laquelle l'arbre de rotor (51) comprend une pièce monobloc qui s'étend de façon à relier le premier plan (P1) et le deuxième plan (P2).

10. Machine de formation de la foule (9), selon l'une quelconque des revendications précédentes, dans laquelle :
- le rotor (29) comprend un disque (61), s'étendant perpendiculairement à l'axe principal (A1), comprenant des évidements (65) distribués autour de l'axe principal (A1) et un alésage central (63), par l'intermédiaire duquel le disque (61) est emmanché sur l'arbre de rotor (51),
- la partie cylindrique (53) est solidaire de l'arbre de rotor (51) et du disque (61) et entoure le disque (61).

11. Machine de formation de la foule (9) selon la revendication 10, dans laquelle l'arbre de rotor (51) comprend :
- une paroi de centrage (67), coopérant avec l'alésage central (63) pour centrer le disque (61) sur l'arbre de rotor (51) ; et
- un collet (69), s'étendant radialement à l'axe principal (A1) et étant agencé entre le premier plan (P1) et le deuxième plan (P2), le disque (61) étant fixé au collet (69) au moyen d'au moins une vis parallèle à l'axe principal (A1).

12. Machine de formation de la foule (9), selon l'une quelconque des revendications précédentes, dans laquelle :
- une course de rotation sans changement de sens du rotor (29) autour de l'axe principal (A1) correspond à une course d'oscillation du levier d'attaque (19) autour du premier axe de levier (A3), la course d'oscillation incluant une orientation de cadre haut, une orientation de croisement et une orientation de cadre bas du levier d'attaque, l'orientation de croisement étant médiane entre l'orientation de cadre haut et l'orientation de cadre bas ; et
- le moteur électrique rotatif (13) comprend des moyens de blocage, qui permettent :
• une configuration de blocage, dans laquelle les moyens de blocage immobilisent le rotor (29) par rapport au stator (23) autour de l'axe principal (A1), sélectivement selon plusieurs orientations de référence prédéterminées, dont :
◊ **une orientation** de réglage d'amplitude de foule, dans laquelle le levier d'attaque (19) est dans l'orientation de cadre haut ou dans l'orientation de cadre bas, et
◊ une orientation de réglage de hauteur de foule, à 90 degrés par rapport à l'orientation de réglage d'amplitude de foule et dans laquelle le levier d'attaque (19) est dans l'orientation de croisement ; et
• une configuration de libération, dans laquelle les moyens de blocage autorisent la rotation du rotor (29) autour de l'axe principal (A1) par rapport au stator (23) ;
et dans laquelle, de préférence, les moyens de blocage comprennent :
- une goupille de blocage (79), mobile par rapport au stator (23) selon une direction parallèle à l'axe principal (A1);
- un premier cran (81), appartenant au rotor (29) et coopérant avec la goupille de blocage (79) dans la configuration de blocage, pour immobiliser le rotor (29) dans l'orientation de réglage d'amplitude de foule ; et
- un deuxième cran (82), appartenant au rotor (29) et coopérant avec la goupille de blocage (79) dans la configuration de blocage, pour immobiliser le rotor (29) dans l'orientation de réglage de hauteur de foule.

13. Machine de formation de la foule (9) selon la revendication 12, dans laquelle la machine de formation de la foule (9) comprend :
- un flasque avant (25), solidaire de la carcasse (21) et comprenant une bride circulaire (26), configurée pour coopérer avec le bâti machine (7), pour que la carcasse (21) puisse être positionnée sur le bâti machine (7) ;
- des moyens de fixation du moteur électrique rotatif (13) sur le bâti machine (7), pour fixer le moteur électrique rotatif (13) au bâti machine (7) lorsque la bride circulaire (26) coopère avec le bâti machine (7) ; et
- un moyen d'indexage, qui est distinct des moyens de fixation et qui impose que, lorsque la bride circulaire (26) coopère avec le bâti machine, la carcasse (21) soit positionnée de sorte que :
• le levier d'attaque (19) soit dans l'orientation de cadre haut ou dans l'orientation de cadre bas lorsque le rotor (29) est dans l'orientation de réglage d'amplitude de foule en configuration de blocage, et
• le levier d'attaque (19) soit dans l'orientation de croisement lorsque le rotor (29) est dans l'orientation de réglage de hauteur de foule en configuration de blocage.

14. Machine de formation de la foule (9) selon l'une quelconque des revendications 12 ou 13, dans laquelle :
- le premier axe de levier (A3) et le deuxième axe de levier (A4) sont reliés par une droite de bras de levier (D34) perpendiculaire au deuxième axe de levier (A4) ;
- l'axe d'excentrique (A2) et le deuxième axe de levier (A4) sont reliés par une droite de bielle (D24) perpendiculaire au deuxième axe de levier (A4) et définissant un angle bielle-levier (BL) avec la droite de bras de levier (D34) ; et
- l'angle bielle-levier (BL) vaut 97 degrés, à plus ou moins 2 degrés, lorsque le levier d'attaque (19) est dans l'orientation de croisement.

15. Ensemble de formation de la foule (5), comprenant un groupe (G1 ; G2 ; G3 ; G4) de machines de formation de la foule (9) selon l'une quelconque des revendications précédentes et dans lequel :
- chaque machine de formation de la foule (9) du groupe (G1 ; G2 ; G3 ; G4) définit une distance de bras de levier (d34), mesurée entre le premier axe de levier (A3) et le deuxième axe de levier (A4) ;
- la distance de bras de levier (d34) de chaque machine de formation de la foule (9) du groupe (G1 ; G2 ; G3 ; G4) est égale à la distance de bras de levier (d34) de chaque autre machine de formation de la foule (9) du groupe (G1 ; G2 ; G3 ; G4) ; et
- lorsque les machines de formation de la foule du groupe (9) sont en configuration de blocage avec le rotor (29) dans l'une des orientations de référence, alors les axes principaux (A1), les axes d'excentrique (A2) et les deuxièmes axes de levier (A4) respectifs des machines de formation de la foule (9) du groupe (G1 ; G2 ; G3 ; G4) sont coplanaires.
